(19) Europäisches Patentamt
European Patent Office
Office européen des brevets

(11) **EP 1 760 457 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(51) Int Cl.:
***G01N 23/04*** *(2006.01)*

(21) Anmeldenummer: 06076408.1

(22) Anmeldetag: **12.07.2006**

(54) **Verfahren und eine Anordnung zum Kalibrieren einer Messanordnung**

Method and a system for calibrating a measuring apparatus

Procédé et dispositif destinés au calibrage d'un système de mesure

(84) Benannte Vertragsstaaten:
**DE FR GB IT**

(30) Priorität: **13.07.2005 DE 102005033187**

(43) Veröffentlichungstag der Anmeldung:
**07.03.2007 Patentblatt 2007/10**

(73) Patentinhaber: **Carl Zeiss Industrielle Messtechnik GmbH**
**73447 Oberkochen (DE)**

(72) Erfinder: **Weiss, Daniel**
**73457 Essingen-Forst (DE)**

(74) Vertreter: **Patentanwälte Bressel und Partner**
**Park Kolonnaden**
**Potsdamer Platz 10**
**10785 Berlin (DE)**

(56) Entgegenhaltungen:
| | |
|---|---|
| EP-A- 1 414 004 | WO-A-2005/018456 |
| DE-A1- 19 819 928 | US-A- 5 149 965 |
| US-A1- 2004 034 298 | US-A1- 2004 252 811 |
| US-A1- 2005 094 771 | |

**Beschreibung**

Die Erfindung betrifft ein Verfahren und eine Anordnung zum Kalibrieren einer Messanordnung, die mittels invasiver Strahlung Durchstrahlungsbilder (und insbesondere Volumenabbildungen und/oder Volumenmessdaten) von Messobjekten erzeugt, insbesondere zum Kalibrieren einer Computertomografie (CT)-Messanordnung.

Die Verwendung invasiver Strahlung für die Untersuchung von Werkstücken ist bekannt. Bei der Computertomografie (CT) wird das Werkstück beispielsweise in der Regel auf einem Drehtisch angeordnet und durch Drehung des Drehtisches in verschiedene Drehstellungen aus verschiedenen Richtungen von Röntgenstrahlung durchstrahlt. Es sind jedoch auch andere Geometrien der Untersuchungsanordnung möglich und bekannt. Die durch Extinktion in dem Material des Werkstücks geschwächte Strahlung wird orts- und zeitaufgelöst von einer Sensoreinrichtung detektiert. In der Praxis werden beispielsweise zwischen 800 und 1.200 Projektionsbilder des Messobjekts aufgenommen, wobei zwischen jeder der Projektionen die Drehstellung um einen konstanten Drehwinkelbetrag verändert wird. Durch die Anwendung eines von mehreren bekannten Verfahren der tomographischen Rekonstruktion, z.B. der gefilterten Rückprojektion, wird daraus ein dreidimensionales Bild des Werkstücks berechnet. Das 3D-Bild gibt jeweils für einzelne kleine Volumenbereiche (Voxel) den lokalen linearen Absorptionskoeffizienten an. Ein Beispiel für die CT wird in DE 39 24 066 A1 beschrieben.

Eine wichtige Voraussetzung für eine genaue Rekonstruktion des Messobjekts ist die Kenntnis der Geometrie der Messanordnung. Es müssen Informationen über die relative Anordnung von Strahlungsquelle, Messobjekt und Detektionseinrichtung vorhanden sein. Die Kalibrierung kann durch eine genaue Vermessung von Strahlungsquelle, Objekttisch und Detektionseinrichtung bei der Erstinstallation der Messanordnung erfolgen. Die einzelnen Komponenten werden dabei mit verschiedenen externen Messinstrumenten oder Hilfsmitteln (z. B. Schieblehre, Laserstrahl-Messeinrichtung) vermessen und genau ausgerichtet. Durch den Einsatz hochgenauer Verstellelemente wird versucht sicherzustellen, dass auch nach einer kontrollierten Bewegung von Elementen der Messanordnung die geometrischen Verhältnisse ausreichend genau für eine exakte Rekonstruktion bekannt sind. Es sind Verfahren bekannt, mit denen einige Teilaspekte der Gesamtgeometrie regelmäßig anhand von Röntgenbildern von geeigneten Kalibrierobjekten nachkalibriert werden können.

Nachteilig an dieser Vorgehensweise sind der zeitliche Aufwand für eine präzise Vermessung der Messanordnung und die Tatsache, dass die Nachkalibrierung ungeeignet ist, die geometrischen Verhältnisse vollständig zu bestimmen. Außerdem ist die Position des Ursprungs der Röntgenstrahlung, insbesondere des Brennflecks einer Röntgenröhre, sowohl mit mechanischen als auch mit optischen Messmitteln nicht ausreichend genau messbar, da die Quelle abgeschirmt ist und im sichtbaren Wellenlängenbereich nicht sichtbar ist, an welcher Stelle sich der Ursprung befindet.

Z. B. ist der Ausgangsort der Röntgenstrahlung ein kleiner Bereich der Oberfläche einer zylindrischen Wolfram-Anode. Die Wolfram-Anode befindet sich im Vakuum hinter einem Beryllium-Fenster, das die erzeugte Röntgenstrahlung austreten lässt. Der exakte Ausgangsort der Röntgenstrahlung ist von der momentanen Einstellung der Elektronenoptik abhängig, die hochenergetische Elektronen auf die Wolfram-Anode lenkt. Der effektive Ort der Röntgenquelle ist damit nicht zur taktilen und nur sehr eingeschränkt zur optischen Vermessung geeignet.

Die sensitiven Elemente einer Detektoreinrichtung für Röntgenstrahlung befinden sich In der Regel hinter einer Verkleidung, die den Szintillatorkristall schützt. Sie sind damit ebenfalls für eine taktile Vermessung nicht zugänglich.

Verändern sich die geometrischen Verhältnisse der Detektoreinrichtung, des Messtischs, der Röntgenstrahlungsquelle oder deren relative Anordnung zueinander (etwa auf Grund von Alterung oder sich verändernden Umgebungstemperaturen) muss erneut eine Kalibrierung durchgeführt werden, die mit erheblichem Zeitaufwand verbunden ist.

EP 1 414 004 A1 beschreibt ein Phantom für medizinische Bildgewinnung. Das Phantom hat einen Behälterbereich mit kugelförmigen Körpern.

US 2004/0034298 A1 offenbart Einrichtungen, die bei der Radiographie verwendet werden. Ein Träger kann so gestaltet sein, dass er eine Mehrzahl von radioopaken Objekten aufnimmt, die im Wesentlichen kugelförmig sind.

US 5,149,965 offenbart eine radioopake Kugel bekannter Abmessungen und Mittel zum Positionieren derselben in einem radiographischen Bildbereich.

US 2005/0094771 A1 beschreibt die Verwendung von Markem, die voneinander beabstandete Kugeln sind, zum Zweck der Bestimmung geometrischer Parameter von volumetrischen CT-Systemen.

WO 2005/018456 A1 betrifft die Verwendung eines Phantoms bei der Kalibrierung eines multimodalen Bildgebungssystems, das einen CT-Scanner aufweist.

US 2004/0252811 A1 beschreibt eine radiographische Vorrichtung mit einer Bilderzeugungseinrichtung, die einen Bildspeicher, eine Positionsinformations-Detektierungseinheit und eine Datensammlungseinrichtung aufweist. Die Datensammlungseinrichtung sammelt Daten von Projektionsbildern, die durch einen Flächendetektor von einem Kalibrierphantom erhalten wurden.

Es ist eine Aufgabe der vorliegenden Erfindung, ein Verfahren und eine Anordnung anzugeben, mit denen eine Messanordnung, die mittels invasiver Strahlung Bilder von Messobjekten erzeugt, insbesondere eine Computertomografie (CT)-Messanordnung, mit gegenüber bekannten Verfahren reduziertem Zeitaufwand und hoher Genauigkeit kalibriert werden kann.

Es wird ein Verfahren zum Kalibrieren einer Messanordnung gemäβ Anspruch 1 vorgeschlagen, die mittels invasiver Strahlung Bilder von Messobjekten erzeugt. Dabei durchdringt die invasive Strahlung (insbesondere geradlinig) ein Kalibrierobjekt und wird von einer Detektionseinrichtung der Messanordnung detektiert. Aus Detektionssignalen der Detektionseinrichtung, die der von der Detektionseinrichtung detektierten Strahlung entsprechen, wird zumindest ein Bild (im Folgenden als Durchstrahlungsbild oder aufgenommenes Bild bezeichnet) des Kalibrierobjekts erzeugt. Das Kalibrierobjekt weist bekannte Abmessungen auf. Ferner werden durch Auswertung des zumindest einen Durchstrahlungsbildes Geometrieparameter eines geometrischen Modells bestimmt, das die Geometrie der Messanordnung beschreibt. Vorzugsweise handelt es sich bei der Messanordnung um eine Computertomografie (CT)-Messanordnung und/oder um eine Messanordnung mit einer Einrichtung, die aus einer Mehrzahl der Durchstrahlungsbilder ein dreidimensionales Bild (Volumenbild) des jeweiligen Messobjekts erzeugt (rekonstruiert) und/oder zumindest für ein solches dreidimensionales Bild erforderliche Volumenmessdaten rekonstruiert.

Insbesondere kann das erfindungsgemäße Verfahren mit Vorteil angewendet werden, wenn das Durchstrahlungsbild einer Messgeometrie entspricht, die das Durchstrahlungsbild durch eine von einer punktförmigen Strahlungsquelle ausgehende Zentralprojektion erzeugt. Der Begriff "entspricht" bedeutet dabei, dass das Durchstrahlungsbild tatsächlich durch eine Zentralprojektion erzeugt wurde oder dass das Durchstrahlungsbild (z. B. durch Ablenkung der invasiven Strahlung vor und/oder nach der Durchstrahlung des Objekts, etwa durch Kollimatoren und/oder Linsen) von einer Messanordnung erzeugt wurde, die einer Zentralprojektion identische Durchstrahlungsbilder erzeugt. Unter einer Zentralprojektion wird verstanden, dass der Weg eines jeden Strahls der invasiven Strahlung von der punktförmigen Strahlungsquelle bis zu der Detektionseinrichtung eine gerade Linie ist. Als punktförmig wird eine Strahlungsquelle auch dann bezeichnet, wenn der Entstehungsbereich der Strahlung oder ein Bereich, den sämtliche für die Projektion verwendete Strahlung durchlaufen muss, in Anbetracht der Gesamt-Geometrie der Messanordnung so klein ist, dass der Bereich als näherungsweise punktförmig aufgefasst werden kann.

Ein wesentlicher Vorteil der Erfindung besteht darin, dass die Geometrieparameter unter denselben oder zumindest unter sehr ähnlichen Messbedingungen ermittelt werden können, wie sie auch bei der eigentlichen Vermessung (insbesondere CT-Vermessung) des Messobjekts bestehen. Insbesondere können die geometrischen Verhältnisse der Strahlungsquelle, eines unter Umständen vorhandenen Drehtisches und der Detektionseinrichtung in dem geometrischen Zustand der Messanordnung bestimmt werden, der auch bei der Vermessung des Messobjekts besteht, und die geometrischen Verhältnisse können zeitnah zur eigentlichen Messung bestimmt werden, insbesondere direkt vor oder direkt nach der eigentlichen CT-Messung. Damit unterscheiden sich die geometrischen Verhältnisse der Kalibriermessung und der Vermessung des Messobjekts nur in solchen Größen, die schnellen zeitlichen Veränderungen (z. B. Drifts) unterworfen sind. Wenn solche schnellen zeitlichen Veränderungen auftreten sollten, so sind sie jedoch auch kritisch für die Vermessung des Messobjekts. Insbesondere gibt es Fälle, in denen bei einer CT-Messung von der zeitlichen Konstanz aller relevanten Geometriegrößen (mit Ausnahme des Drehwinkels des Messobjekts) während der gesamten Messdauer (z.B. mindestens 30 Minuten) ausgegangen werden muss. Aus diesem Grund sind in allen CT-Anlagen solche schnellen zeitlichen Drifts eliminiert. Durch den Einsatz des Verfahrens entfällt die Notwendigkeit für eine indirekte und aufwändige Bestimmung der Geometrie der Strahlungsquelle und der Detektionseinrichtung.

Die Abmessungen eines für das Verfahren geeigneten Kalibrierobjekts können dagegen auf einfache Weise bestimmt werden. Insbesondere können diese zuvor als bekannt bezeichneten Abmessungen des Kalibrierobjekts durch eine von der zu kalibrierenden Messanordnung verschiedene, zweite Messanordnung ermittelt werden. Bei dieser zweiten Messanordnung kann ein Koordinatenmessgerät vorgesehen sein, das ausgestaltet ist, durch optisches und/oder mechanisches Abtasten zumindest von Teilen einer Oberfläche des Kalibrierobjekts die Abmessungen des Kalibrierobjekts zu ermitteln.

Unter dem Begriff Durchstrahlungsbild werden insbesondere solche Bildinformationen über das Messobjekt bzw. über das Kalibrierobjekt verstanden, die gemäß einem zweidimensionalen Koordinatensystem geordnet sind. Insbesondere weist die Messanordnung eine Detektionseinrichtung auf, die ortsaufgelöst bezüglich eines zweidimensionalen Koordinatensystems auftreffende Strahlung und/oder Partikel detektiert. Geeignet ist beispielsweise eine Kombination eines Szintillator-Materials mit einem Feld von Fotodioden. Die Strahlung und/oder Partikel treffen auf das Szintillator-Material und werden dort in sichtbare Strahlung umgewandelt, die von den Fotodioden detektiert wird. Es können jedoch auch andere Detektionseinrichtungen verwendet werden, z. B. linienförmige. In diesem Fall werden dann beispielsweise mehrere eindimensionale Bilder aufgenommen und/oder wird ein Empfangsbereich, in den die geschwächte Strahlung nach dem Durchdringen des Messobjekts oder des Kalibrierobjekts gelangt, von der Detektionseinrichtung gescannt.

Von dem Begriff invasive Strahlung ist Strahlung jeglicher Art umfasst, die das Messobjekt durchdringt. Außer elektromagnetischer Strahlung - wie z. B. Röntgenstrahlung - kann auch Partikelstrahlung (etwa Elektronenstrahlung oder Positronenstrahlung) eingesetzt werden. Es kann außer der eigentlichen Messstrahlung auch Strahlung aus Sekundäreffekten (wie Anregung von Energiezuständen, z. B. Lumineszenz) oder Streustrahlung detektiert werden. Derartige Strahlung ist üblicherweise als "Untergrund" oder Rauschen in den Messsignalen vorhanden. Dennoch können die Geometrieparameter durch Auswertung der Strahlung, die den Kalibrierkörper durchdringt, gefunden werden.

Bei einer bevorzugten Art der Untersuchung des Messobjekts wird elektromagnetische Strahlung verwendet, die das Messobjekt durchdringt und auf der gegenüberliegenden Seite der Strahlungsquelle von der örtlich auflösenden Sensoreinrichtung detektiert wird.

Weiterhin wird bevorzugt, dass die elektromagnetische Strahlung Röntgenstrahlung oder Gammastrahlung (harte Röntgenstrahlung) im Energiebereich von 0,5 keV bis 50 MeV liegt. Besonders bevorzugt wird Röntgenstrahlung im Energiebereich von 2 keV bis 700 keV.

Bei der Verwendung von Röntgenstrahlungsquellen mit kleinem Brennfleck kann die Quelle der invasiven Strahlung als nahezu punktförmig angenommen werden. Eine derartige Messanordnung mit nahezu punktförmiger Strahlungsquelle wird ebenfalls besonders bevorzugt. Beispielsweise wird eine Röntgenstrahlungsquelle mit einem Brennfleck-Durchmesser im Bereich von 5 bis 100 Mikrometer verwendet. Quellen dieser Art erzeugen in der Regel polychromatische Röntgenstrahlung, z. B. im Energiebereich von 10 bis 450 keV. Im Hinblick auf den im Vergleich zu dem Brennfleck-Durchmesser in der Regel wesentlich größeren Abstand zum Messobjekt und zu der Detektionseinrichtung (in der Größenordnung von einigen zehn Zentimetern bis mehr als einem Meter) kann der Brennfleck als punktförmig bezeichnet werden. Die mit der Detektionseinrichtung aufgenommenen Bilder (oder die entsprechenden Bilddaten) enthalten Informationen über die Intensität der Röntgenstrahlung, die das Messobjekt durchlaufen hat. Aus diesen Informationen kann in an sich bekannter Weise für jedes Pixel des Bildes der so genannte kumulative Absorptionskoeffizient berechnet werden. Die so erhaltenen Bilder entsprechen auf Grund der punktförmigen Strahlungsquelle Zentralprojektionen (das Projektionszentrum koinzidiert mit der Strahlungsquelle) einer Materialeigenschaft (des lokalen Extinktionskoeffizienten) des Messobjekts, da die von der Strahlungsquelle emittierte invasive Strahlung ein divergierendes Strahlenbündel bildet.

Wie im Folgenden beschrieben wird, kann für eine solche Messanordnung mit nahezu punktförmiger Strahlungsquelle ein geometrisches Modell definiert werden, das eine verhältnismäßig geringe Anzahl von Geometrieparametern aufweist. Die Erfindung ist jedoch nicht darauf beschränkt. Ein geometrisches Modell für ein Ausführungsbeispiel der Messanordnung wird noch anhand der beigefügten Zeichnung beschrieben.

Das Kalibrierobjekt weist zumindest ein Kalibrierelement mit einer kugelförmigen Oberfläche (Kugeloberfläche) und/oder ein Kalibrierelement auf, dessen Oberfläche zumindest einen Teil einer Kugeloberfläche bildet.

Aus dem zumindest einen Durchstrahlungsbild, das durch die Messanordnung von dem Kalibrierobjekt erzeugt worden ist, kann dann (insbesondere bezogen auf ein Koordinatensystem des Bildes, z. B. in Detektorpixel-Koordinaten) der Mittelpunkt der Kugeloberfläche des zumindest einen Kalibrierelements bestimmt werden, insbesondere eine Position des Mittelpunktes der Kugeloberfläche und/oder eine Relativposition und/oder ein Abstand des Mittelpunktes zu einem weiteren Ort in dem Kalibrierobjekt. Geometrische Informationen über den Mittelpunkt in dem Durchstrahlungsbild, also z. B. die Position, die Relativposition und/oder der Abstand werden dann bei der Bestimmung der Geometrieparameter verwendet.

Bei der besonders bevorzugten Ausführungsform wird insbesondere aus einem einzelnen Durchstrahlungsbild die zugehörige Umrisslinie ermittelt, die dem durch die Kugeloberfläche definierten Rand der Kugel entspricht. Aus der Umrisslinie wiederum wird dann die geometrische Information über den Mittelpunkt ermittelt.

Die Verwendung kugelförmiger Oberflächen oder Teiloberflächen hat den Vorteil, dass ihre Position, Relativposition und/oder ein entsprechender Abstand zu einem Bezugspunkt (insbesondere ihr Mittelpunkt) mit hoher Präzision ermittelt werden kann. Dies gilt sowohl für die Ermittlung aus dem jeweiligen Durchstrahlungsbild als auch für die Ermittlung der Abmessungen (z. B. der Koordinaten in einem Koordinatensystem des Kalibrierobjekts) mithilfe eines Koordinatenmessgerätes.

Die Erfindung ist jedoch nicht auf Kalibrierelemente mit (teil-) kugelförmiger Oberfläche beschränkt.

Vielmehr weist das Kalibrierobjekt zumindest ein Kalibrierelement auf und wird bei der Auswertung des zumindest einen Durchstrahlungsbildes in der folgenden Weise vorgegangen:

a) Es wird ein Schätzwert für zumindest einen Ort eines geometrischen Merkmals des Kalibrierelements in dem Durchstrahlungsbild ermittelt. Wenn bereits ein solcher Schätzwert vorliegt, kann dieser auch ohne erneute Ermitt-lung verwendet werden. Beispielsweise kann der Schätzwert automatisch durch Bildverarbeitungssoftware ermittelt werden, die das Bild des Kalibrierelements erkennt und den Schätzwert für den Ort des geometrischen Merkmals ausgibt. Hierzu werden beispielsweise die Grauwerte des Durchstrahlungsbildes sowohl zeilenweise als auch spaltenweise jeweils der Reihe nach ausgewertet und werden Bereiche erkannt, die etwa gleich große Grauwerte aufweisen. Unter Verwendung vordefinierter Bedingungen für die geometrische Form solcher Bereiche kann dann erkannt werden, ob es sich um ein Bild des Kalibrierelements handelt. Z.B. wird erkannt, dass es sich um einen annähernd kreisförmigen Bereich handelt, wird der Ort des Mittelpunkts des kreisförmigen Bereichs bestimmt und wird dieser Ort als Schätzwert für den Kugelmittelpunkt ausgegeben. In diesem Fall ist das geometrische Merkmal des Kalibrierelements also der Kugelmittelpunkt. Bei anderen Kalibrierelementen können auch die Orte von mehr als einem geometrischen Merkmal geschätzt werden, z.B. zwei der vier Ecken eines Parallelogramms, das den Umriss eines Bildes eines Quaders darstellt.

b) Unter Verwendung des Schätzwertes werden nun Linien in dem Durchstrahlungsbild definiert, die quer zu einem Umriss des Kalibrierelements verlaufen. Hierzu können wiederum vordefinierte Algorithmen in Software implementiert sein, die den Ort und die Richtung der vorzugsweise gerade in dem Durchstrahlungsbild verlaufenden Linien berechnen. Die Verwendung gerader Linien ist nicht auf dieses Ausführungsbeispiel beschränkt. Insbesondere handelt es sich bei den Linien um kurze Linien (auch Liniensegmente genannt), so dass jeweils nur eine kurze Linie definiert ist, die sich über eine kurze Strecke beidseits des Umrisses des Kalibrierelements erstreckt. Dadurch wird der Rechenaufwand für den folgenden Schritt c) des Verfahrens reduziert. Im Fall eines Kalibrierelements mit (teil-) kugelförmiger Oberfläche wird beispielsweise unter Verwendung des Schätzwertes für den Ort des Kugelmittelpunktes in dem Durchstrahlungsbild und unter Verwendung eines Schätzwertes für den Radius oder Durchmesser des Kugelbildes in dem Durchstrahlungsbild eine Vielzahl der Linien oder Liniensegmente definiert, wobei die Linien oder die Verlängerungen der Liniensegmente sich in dem Ort des Kugelmittelpunktes schneiden und jeweils einen bestimmten, vorzugsweise gleichen Winkelabstand zu ihrer Nachbarlinie aufweisen. Der Winkel ist dabei als ein Winkel um den Kugelmittelpunkt definiert.

c) Nun wird entlang der Linien (insbesondere entlang der Liniensegmente) ausgewertet, wie sich die Bildwerte des Durchstrahlungsbildes verhalten. Insbesondere handelt es sich bei den Bildwerten um Grauwerte oder Helligkeitswerte bzw. Intensitätswerte der von der Bildaufnahmevorrichtung empfangenen Strahlung. Aus den Bildwerten wird jeweils für die Linien ein Umriss-Ort in dem Durchstrahlungsbild festgestellt, wobei die Linie den Umriss des Kalibrierelements in dem Umriss-Ort schneidet. Ein Umriss-Ort entspricht einem Ort auf der Oberfläche des Kalibrierelements und kann daher als Oberflächenpunkt bezeichnet werden.

d) Aus den Umriss-Orten wird eine Lage des Kalibrierelements ermittelt und die Lage wird bei der Bestimmung der Geometrieparameter des geometrischen Modells der Messanordnung verwendet.

Das zuvor beschriebene Verfahren hat den Vorteil einer hohen Genauigkeit bei der Bestimmung der Lage des Kalibrierelements in dem Durchstrahlungsbild. Die Lage bestimmter Arten von Kalibrierelementen, wie beispielsweise Kugeln, kann durch Angabe des Ortes von einem ausgezeichneten Punkt (z.B. des geometrischen Merkmals, dessen Schätzwert verwendet wurde) angegeben werden. Für eine Kugel als Kalibrierelement wird daher vorzugsweise der Ort des Kugelmittelpunktes in dem Durchstrahlungsbild aus den Umriss-Orten ermittelt. Dieser Ort unterscheidet sich in der Regel von dem Schätzwert. Er ist auch nicht abhängig von der genauen Position des Schätzwertes, da dieser lediglich für die Definition der Linien genutzt wurde.

Die Linien ermöglichen eine jeweils auf das Koordinatensystem der Linie bezogene eindimensionale Auswertung der Bildwerte. Daher kann der Ort, an dem die Linie den Umriss schneidet, sehr präzise bestimmt werden. Der Ort kann mit einer höheren örtlichen Auflösung bestimmt werden als die Abmessung eines Pixels des Durchstrahlungsbildes entlang der Linie. Dies gelingt insbesondere dann mit einer Auflösung von einem Bruchteil einer Pixelabmessung, wenn wie bevorzugt eine Modellfunktion verwendet wird, um den Umriss-Ort festzustellen. Hierzu wird die Modellfunktion in einen Verlauf der Bildwerte entlang der Linie oder in einen Verlauf einer örtlichen Ableitung der Bildwerte entlang der Linie gefittet. Beispielsweise wird eine Normalverteilungsfunktion in die erste örtliche Ableitung der Bildwerte entlang der Linie gefittet.

Beispielhaft sind die für die Auswertung der Bildwerte entlang der Linie genutzten Bildwerte das Ergebnis einer Vorverarbeitung. Bei der Vorverarbeitung werden auf der Linie liegende Bildwerte unter Berücksichtigung benachbarter Pixel modifiziert. Auf diese Weise kann verhindert werden, dass die Bildwerte auf der Linie deswegen schwanken, weil die Linie lediglich einen Randbereich eines Pixels schneidet. Bei der Vorverarbeitung geht beispielsweise ein solcher kleiner Randbereich lediglich mit seiner Fläche gewichtet in den resultierenden Bildwert ein. Dabei kann das Gewicht der Fläche auf eine Umgebung eines Punktes auf der Linie bezogen sein, wobei die Umgebung eine vorgegebene Größe aufweist, z.B. die Größe einer Fläche von vier Pixeln.

Das zuvor beschriebene Verfahren der Bestimmung von Umriss-Orten wird vorzugsweise für eine Mehrzahl von verschiedenen Kalibrierelementen ausgeführt und/oder für dasselbe Kalibrierelement in verschiedenen Durchstrahlungsbildern, die z.B. bei verschiedenen Einfallsrichtungen der invasiven Strahlung auf das Kalibrierobjekt aufgenommen wurden.

Insbesondere kann bei der Auswertung des Durchstrahlungsbildes eine Vielzahl von Punkten der Umrisslinie (z. B. Kreislinie oder aufgrund der divergierenden Strahlung in der Regel ein Ellipsenumriss) ermittelt werden, wobei die Umrisslinie in dem Bild den Rand des Kalibrierelements definiert. Aus der Umrisslinie wiederum lässt sich der Mittelpunkt ermitteln. Außerdem lässt sich, wie für sich genommen bekannt, durch ein Koordinatenmessgerät (beispielsweise durch Antasten einer Mehrzahl von Oberflächenpunkten, z. B. 7 bis 10 Punkte) sehr genau die Position des Mittelpunktes einer Präzisionskugel bestimmen.

Typischerweise liegen die aus dem Bild ermittelten Punkte nicht auf einer regelmäßigen konvexen Umrisslinie des Kalibrierelements, sondern es gehorchen ihre Abstände zu einer regelmäßigen Umrisslinie einer statistischen Verteilung, insbesondere da die Bildintensität mehrere Rauschanteile enthält, u.a. das dem Detektionsprozess inhärente Photonenrauschen, welches vom Detektortyp unabhängig ist, sowie das elektronische Rauschen des speziellen Detektors. Dher wird durch Ausgleichsrechnung (Fit) eine zugehörige elliptische Umrisslinie ermittelt, beispielsweise diejenige Umrisslinie ermittelt, die zu dem geringsten mittleren Abstand (oder alternativ: zu der geringsten Summe von Potenzen, beispielsweise 2. Potenz, der Abstände) der ermittelten Punkte von der regelmäßigen Umrisslinie führt. Dabei ist festgelegt, dass die Umrisslinie eine Kreislinie oder eine Ellipsenlinie ist. Diese Vorkenntnis wird berücksichtigt. Beispielsweise können dadurch die beiden Radien, der Hauptachsenwinkel und die Mittelpunktsposition der Ellipsenlinie als Fit-Parameter bestimmt werden. Der Ellipsenmittelpunkt wird so mit deutlich höherer Genauigkeit als der einzelne Umrisspunkt bestimmt.

Anders ausgedrückt löst die Bestimmung des Mittelpunktes das Problem, dass einzelne Punkte auf dem Rand eines Elements in der Regel nur mit einem Fehler aus dem Bild ermittelt werden können. Dabei eignet sich eine Kugelform besonders gut, da sie die höchst mögliche Symmetrie zu einem Bezugspunkt (dem Mittelpunkt) aufweist.

Die bekannten Abmessungen des Kalibrierobjektes können Informationen über die Position eines Mittelpunktes der Kugeloberfläche und/oder über eine Relativposition und/oder über einen Abstand des Mittelpunktes zu einem weiteren Ort in dem Kalibrierobjekt aufweisen.

Unabhängig von dem konkreten Ausführungsbeispiel eines Kalibrierobjekts mit kugelförmigen Kalibrierelementen hat das Kalibrierobjekt zumindest ein Formmerkmal (im Allgemeinen eine Mehrzahl von Formmerkmalen), das jeweils in einem Durchstrahlungsbild festgestellt werden kann. Es wird daher allgemeiner formuliert vorgeschlagen, dass aus dem Durchstrahlungsbild eine Mehrzahl von Oberflächenpunkten ermittelt wird, wobei die Oberflächenpunkte Punkte auf einer Oberfläche eines Kalibrierelements des Kalibrierobjekts sind und wobei aus der Mehrzahl von Oberflächenpunkten durch Ausgleichsrechnung eine der Oberfläche zugeordnete Umrisslinie ermittelt wird.

Durch die Ausgleichsrechnung kann die Präzision bei der Bestimmung des Formmerkmals wesentlich erhöht werden. Als das Formmerkmal kann z. B. die Umrisslinie oder eine daraus abgeleitete Information (z. B. der Kugelmittelpunkt) betrachtet werden.

Zur Bestimmung der Geometrieparameter des geometrischen Modells der Messanordnung kann dann ein iteratives Lösungsverfahren angewendet werden. Insbesondere kann das Lösungsverfahren bereits so vorbereitet (z. B. in Software implementiert) sein, dass die bekannten Abmessungen und Auswertungsergebnisse des durch die Messanordnung von dem Kalibrierobjekt aufgenommenen Bildes lediglich in eine Recheneinrichtung eingegeben werden und daraus automatisch die Geometrieparameter berechnet werden. Dies gilt auch unabhängig davon, ob das Kalibrierobjekt kugelförmige Kalibrierelemente aufweist.

Für eine Mehrzahl von Bildmerkmalen in dem Durchstrahlungsbild können auf ein Koordinatensystem des Durchstrahlungsbildes bezogene Bildkoordinaten bestimmt werden, wobei mit den Bildkoordinaten und mit entsprechenden Koordinaten aus den bekannten Abmessungen des Kalibrierobjekts entsprechend dem geometrischen Modell ein Gleichungssystem gebildet wird und wobei aus dem Gleichungssystem die Geometrieparameter bestimmt werden. Vorzugsweise ist das Gleichungssystem ein hinsichtlich der zu bestimmenden Anzahl von Geometrieparameter überbestimmtes Gleichungssystem. Dies verbessert die Fehlertoleranz für Bildbestimmungsfehler und/oder für Messfehler bei der Bestimmung der bekannten Abmessungen des Kalibrierobjekts.

Beispielhaft wird das Gleichungssystem iterativ, durch Annahme und Veränderung möglicher Lösungswerte der Geometrieparameter gelöst, wobei für jeden verwendeten Lösungswerte-Satz der Geometrieparameter ein Bewertungsmaß für eine Güte des Lösungswerte-Satzes bestimmt wird und die Geometrieparameter des geometrischen Modells aus dem Lösungswerte-Satz mit der höchsten Güte erhalten werden. Insbesondere bei geometrischen Modellen mit einer Mehrzahl von Geometrieparametern kann so zuverlässig die beste Lösung ermittelt werden. Außerdem hat diese Verfahrensweise den Vorteil, dass die Lösung auch einen Fit darstellt, der Fehler des geometrischen Modells (z. B. der Annahme, dass die Strahlungsquelle exakt punktförmig ist) ausgleicht.

Ein Kalibrierobjekt kann zumindest eines der im Folgenden beschriebenen Merkmale oder beliebige Kombinationen der im Folgenden beschriebenen Merkmale haben. Das Kalibrierobjekt kann für die Kalibrierung einer Messanordnung, die mittels invasiver Strahlung Durchstrahlungsbilder von Messobjekten erzeugt, insbesondere einer Computertomografie (CT)-Messanordnung, verwendet werden,

Insbesondere weist das Kalibrierobjekt eine Mehrzahl von Kalibrierelementen auf (vorzugsweise die oben beschriebenen kugelförmigen oder teilkugelförmigen Kalibrierelemente) auf, wobei Formmerkmale (vorzugsweise Umrisse) der einzelnen Kalibrierelemente aus dem durch die Messanordnung aufgenommenen Bild bestimmbar sind. Dies erlaubt es insbesondere, jeweils die Position, die Relativposition und/oder den Abstand sowohl aus dem aufgenommenen Bild als auch auf andere Weise zu bestimmen, z. B. einmalig mittels der von der zu kalibrierenden Messanordnung verschiedenen, zweiten Messanordnung (beispielsweise Koordinatenmessgerät) zu ermitteln und bei der Bestimmung der Geometrieparameter zu verwenden.

Bei einer konkreten Ausgestaltung eines derartigen Kalibrierobjekts liegen zumindest bei einem Teil der Kalibrierelemente mindestens jeweils zwei Drittel (z. B. mindestens drei Viertel, vorzugsweise mindestens vier Fünftel) der kugelförmigen Oberfläche der Kalibrierelemente frei, d. h. sind für eine optische oder mechanische Abtastung durch ein Koordinatenmessgerät zugänglich.

Über den nicht freiliegenden Teil der Oberfläche ist das Kalibrierelement jeweils mit den anderen Kalibrierelementen verbunden, z. B. über eine Platte aus einem anderen Material als die Kalibrierelemente, dessen mechanischen und/oder thermomechanischen Eigenschaften bekannt sind.

Bei dieser konkreten Ausgestaltung oder auch bei einer alternativen Ausgestaltung ist das zumindest eine Kalibrierelement z. B. mit einem Teil seines Volumens in eine Kalotte eingesetzt und darin fixiert, wobei die Kalotte in einem Halterungselement (z. B. der Platte) des Kalibrierobjekt gebildet ist.

Die Befestigung der Kalibrierelemente aneinander und/oder an einer Halterung des Kalibrierobjekts erfüllt vorzugsweise weiterhin die Forderung, dass der auszuwertende Teil des Kalibrierobjekts (insbesondere dessen Umrisslinie) in dem mit Hilfe der Messeanordnung aufgenommenen Bild des Kalibrierobjekts vor einem (möglichst) homogenen Hintergrund erscheint. Bei der Verwendung von kugelförmigen Kalibrierelementen kann dies (wie in dem vorangehenden Absatz definiert) durch Einsetzen (und z. B. Verkleben) der Kugeln in eine Kalotte geeigneter Größe gewährleistet werden. Der im aufgenommenen Bild sichtbare Kugelumriss liegt dann vor dem homogenen Hintergrund der tragenden Konstruktion (Halterungselement, z. B. der Platte) und kann optimal für die Bestimmung der Umrisspunkte verwendet werden.

Allgemeiner formuliert ist das Kalibrierobjekt vorzugsweise derart gestaltet und bei der Erzeugung des Bildes derart positioniert und ausgerichtet, dass in dem aufgenommenen Bild eine Umrisslinie des zumindest einen Kalibrierelements vor einem homogenen Hintergrund erscheint.

Besonders bevorzugt wird eine Ausgestaltung, bei der zwei solche Anordnungen vorgesehen sind, wobei die Anordnungen jeweils eine Platte oder eine andere flache Befestigungsstruktur (z. B. eine Struktur mit Streben, die die Kalibrierelemente miteinander verbinden) aufweisen, mit der eine Mehrzahl der Kalibrierelemente fest verbunden ist. Dabei ist die Anzahl der Kalibrierelemente mit jeweils kugelförmiger oder teilkugelförmiger Oberfläche in beiden Anordnungen vorzugsweise gleich.

Für jedes Kalibrierobjekt, das in Zusammenhang mit der vorliegenden Erfindung verwendet wird, wird bevorzugt, dass es besonders steif gegenüber Verwindungskräften ist. Dies gewährleistet, dass das Kalibrierobjekt, speziell die Positionen der Kalibrierelemente, keine bzw. nur vernachlässigbare Veränderungen zwischen der 3d-Vermessung mit dem KMG und der Aufnahme von Röntgenbildern in der Messanordnung erfährt. Eine Plattenanordnung (mit Platten hoher Steifigkeit) oder eine Strebenstruktur sind daher besonders gut geeignet.

Z. B. erstrecken sich die Befestigungsstrukturen parallel zueinander und/oder weisen die jeweils daran befestigten Kalibrierelemente in der Art der Knoten einer regelmäßigen Gitterstruktur regelmäßige Abstände zueinander auf. Insbesondere liegen die Mittelpunkte der Kalibrierelemente daher in zwei verschiedenen parallelen Ebenen und bilden jeweils eine regelmäßige, zweidimensionale Gitterstruktur, bzw. bilden zusammen eine dreidimensionale Gitterstruktur mit Gitterpunkten in zwei parallelen Ebenen. Dies erlaubt es, in einfacher Weise aus der relativen Lage der Gitterpunkte (die durch die Mittelpunkte der Kalibrierelemente gebildet werden) in dem Bild die Orientierung des Kalibrierobjekts bei der Messung zu ermitteln.

Dabei sind die Kalibrierelemente vorzugsweise so angeordnet, dass ein geradliniger Strahl der invasiven Strahlung, der sich senkrecht (oder annähernd senkrecht, damit das Kalibrierobjekt genauso gut auch in leicht veränderter Drehstellung vermessen werden kann) zu den Ebenen ausbreitet, lediglich höchstens eines der Kalibrierelemente durchquert oder streift. Die Kalibrierelemente der verschiedenen Ebenen sind also versetzt gegeneinander angeordnet. Dadurch können die Umrisse der einzelnen Kalibrierelemente vollständig ausgewertet und die Bildpositionen der Mittelpunkte der Kalibrierelemente mit maximaler Genauigkeit bestimmt werden.

Durch Verwendung einer Vielzahl der Kalibrierelemente und wenn entsprechend viele Abmessungen (z. B. Abstände der Kugelmittelpunkte) bekannt sind, kann die Zuverlässigkeit und Präzision der Kalibrierung weiter erhöht werden. Fehler bei der Bestimmung der Formmerkmale einzelner Kalibrierelemente wirken sich in diesem Fall nicht oder nur mit verminderter Wirkung störend aus. Daher werden insbesondere zumindest 20 (z. B. zumindest 35, vorzugsweise zumindest 50) Kalibrierelemente als Teil eines Kalibrierobjekts verwendet.

Generell, bei anderen Ausführungsformen der Erfindung, müssen nicht kugelförmige Kalibrierelemente verwendet werden, auch wenn deren Verwendung bevorzugt ist. Im Allgemeinen reicht es aus, wenn das Kalibrierobjekt eine Mehrzahl von Formmerkmalen aufweist, zu denen entsprechende bekannte Abmessungen vorliegen und/oder durch ein Koordinatenmessgerät bestimmt werden. Im Fall der kugelförmigen Kalibrierelemente sind die Kugeloberflächen die Formmerkmale und geben die bekannten Abmessungen beispielsweise die Abstände der Mittelpunkte der Kugeln zueinander an.

Vorzugsweise liegt bei den bekannten Abmessungen des Kalibrierobjekts zusätzlich die Information vor, bei welcher Temperatur die bekannten Abmessungen vorliegen. Alternativ oder zusätzlich wird bei der Vermessung des Kalibrierobjekts durch ein Koordinatenmessgerät die Temperatur des Kalibrierobjekts gemessen. Ferner wird bevorzugt, dass bei der Vermessung des Kalibrierobjekts in der Messanordnung mittels invasiver Strahlung die Temperatur des Kalibrierobjekts gemessen wird. Dies ermöglicht unter Berücksichtigung des jeweiligen thermischen Ausdehnungskoeffizienten des oder der Materialien des Kalibrierobjekts eine etwaige thermische Ausdehnung zu berücksichtigen.

Die Erfindung betrifft ferner eine Anordnung zum Kalibrieren einer Messanordnung gemäß Anspruch 17, die mittels invasiver Strahlung Durchstrahlungsbilder von Messobjekten erzeugt, insbesondere einer Computertomografie (CT)-Messanordnung. Die Anordnung weist Folgendes auf:

- eine Strahlungsquelle zur Erzeugung der invasiven Strahlung,
- einen Messraum, in dem ein Messobjekt angeordnet werden kann, sodass die von der Strahlungsquelle ausgehende invasive Strahlung das Messobjekt durchdringen kann,
- eine Detektionseinrichtung zur Detektion von Strahlung. die ein Ergebnis der Durchstrahlung des Messobjekts mit der invasiven Strahlung ist,
- ein Kalibrierobjekt, insbesondere das Kalibrierobjekt in einer der zuvor beschriebenen Ausgestaltungen, wobei das Kalibrierobjekt als ein Messobjekt in dem Messraum angeordnet ist,

wobei die Strahlungsquelle, der Messraum und die Detektionseinrichtung Teil der Messanordnung zur Erzeugung von Durchstrahlungsbildem von Messobjekten mittels invasiver Strahlung sind. Weitere Merkmale sind in den Ansprüchen definiert.

Die Erfindung wird nun anhand von Ausführungsbeispielen näher beschrieben. Die einzelnen Figuren der Zeichnung zeigen:

Fig. 1 eine Geometrie einer Messanordnung mit einer Röntgenstrahlungsquelle, einem Messobjekt und einer zweidimensional ortsauflösenden Detektoreinrichtung,

Fig. 2 eine schematische Seitenansicht einer besonders bevorzugten Ausgestaltung eines Kalibrierobjekts,

Fig. 3 eine perspektivische, von einem Betrachtungspunkt aus gesehene Draufsicht auf das in Fig. 2 dargestellte Kalibrierobjekt von der Seite, die in Fig. 2 unten liegt, ähnlich der Perspektive bei einer Röntgenbildaufnahme mit Zentralprojektion,

Fig. 4 die Darstellung einer aus einem Röntgenbildausschnitt erhaltenen, rauschbehafteten Umrisslinie sowie der ausgleichenden Ellipse, mit Darstellung der mittleren Ablage,

Fig. 5 schematisch einen Kugelumriss und senkrecht zum Kugelumriss verlaufende Liniensegmente,

Fig. 6 schematisch den Grauwertverlauf entlang eines Liniensegments, dessen Ableitung sowie die mit einer geeigneten Modellfunktion gefittete Ableitung.

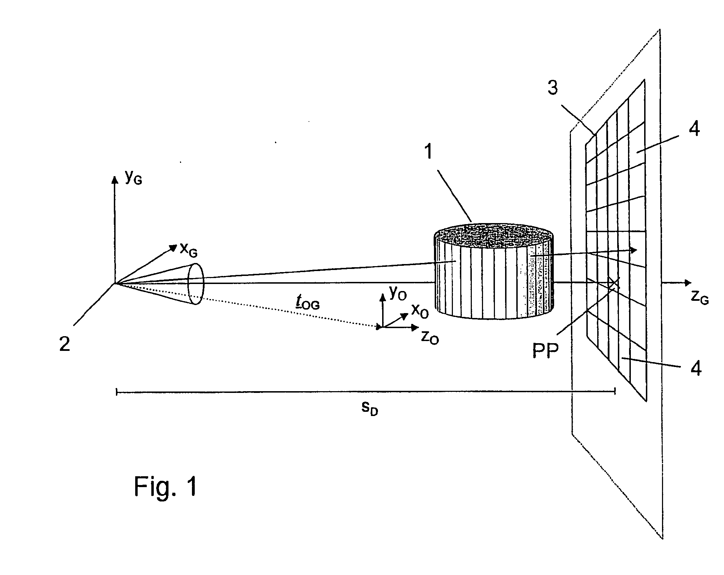

Die schematisch in Fig. 1 dargestellte Messanordnung weist ein Messobjekt 1 auf, das zwischen einer Röntgenstrahlungsquelle 2 und einer Detektionseinrichtung 3 angeordnet ist. Die Röntgenstrahlungsquelle 2 ist nicht näher dargestellt und wird lediglich durch den Ursprung eines kartesischen Koordinatensystems erkennbar gemacht. Der Ursprung des Koordinatensystems GKS (Gerätekoordinatensystem) der Messanordnung, dessen Koordinatenachsen mit $x_G$, $y_G$, $z_G$ bezeichnet sind, entspricht der Position der punktförmigen Strahlungsquelle. Die Detektionseinrichtung weist ein Feld von fünf mal acht Detektorfeldern auf, die jeweils durch (auf Grund der perspektivischen Darstellung verzerrte) Quadrate dargestellt sind. Einzelne der Detektorfelder, die jeweils voneinander unabhängige Detektionssignale liefern können, sind mit dem Bezugszeichen 4 bezeichnet. In der Praxis können Detektionseinrichtungen mit wesentlich mehr Detektorfeldern verwendet werden.

Wie nicht näher dargestellt ist, kann das Messobjekt 1 um eine vertikale Drehachse gedreht werden, damit die von der Strahlungsquelle 2 ausgehende Strahlung bezüglich eines Koordinatensystems OKS (Objektkoordinatensystem) des Messobjekts 1 (dessen Achsen in Fig. 1 mit $x_O$, $y_O$, $z_O$ bezeichnet sind), aus unterschiedlichen Richtungen einfallen und das Messobjekt 1 durchqueren kann. Der Abstand zwischen dem Messobjekt 1 und der Detektionseinrichtung 3 kann in der Praxis anders als dargestellt sein, z. B. wesentlich größer als dargestellt, um die Auswirkungen von Sekundäreffekten wie Lumineszenz und Compton-Streuung nicht, oder nur zu einem kleinen Anteil zu detektieren und/oder damit die Projektion des Messobjekts 1 die Fläche der Detektionseinrichtung zu einem höheren Grad ausfüllt.

In Fig. 1 ist der lotrechte Abstand der Röntgenstrahlungsquelle 2 zur Ebene der Detektionseinrichtung 3 mit $s_D$ bezeichnet. Ein Translationsvektor $\underline{t}_{OG}$ und ein zugehöriger gepunkteter Pfeil deuten an, dass das Koordinatensystem GKS der Strahlungsquelle 2 und das Koordinatensystem OKS des Messobjekts 1 in jeder Drehstellung des Messobjekts 1 durch Transformation ineinander übergeführt werden können.

Nachdem in zahlreichen verschiedenen Drehstellungen durch die Detektionseinrichtung 3 Röntgenbilder des Messobjekts 1 aufgenommen worden sind, wird z.B. durch gefilterte Rückprojektion ein rekonstruiertes dreidimensionales Bild des Messobjekts 1 berechnet. Das dreidimensionale Bild wird in den Koordinaten des Messobjekt 1 angegeben. Es weist für jeden einzelnen der Volumenbereiche (Voxel) des Bildes einen Wert auf, der ein Maß für die Schwächung der Röntgenstrahlung in dem Volumenbereich ist.

Eine wichtige Voraussetzung für eine genaue Rekonstruktion des Messobjekts ist die Kenntnis der Geometrie der Messanordnung. Insbesondere müssen präzise Informationen über die relative Position und relative Ausrichtung des Messobjekts und der Strahlungsquelle sowie des Abstandes der Strahlungsquelle zu der Detektionseinrichtung (oder äquivalente Informationen) vorhanden sein. Allgemeiner formuliert müssen Informationen über die relative Anordnung von Strahlungsquelle, Messobjekt und Detektionseinrichtung vorhanden sein. Insbesondere wenn bei der CT lokale Messartefakte auftreten (wie es häufig auf Grund des Effekts der so genannten Strahlaufhärtung der Fall ist), ist es nicht ausreichend, einzelne äußere Abmessungen des Messobjekts zu bestimmen und mit dieser Information aufgenommene Bildinformationen oder daraus abgeleitete Informationen zu skalieren.

Im Folgenden wird nun ein geometrisches Modell der in Fig. 1 dargestellten Messanordnung beschrieben. Wie gezeigt wird, hat die Messanordnung neun Freiheitsgrade. Dementsprechend können neun Geometrieparameter definiert werden, sodass die Geometrie der Messanordnung durch die Geometrieparameterwerte eindeutig bestimmt ist. Jedem der Geometrieparameter entspricht ein Freiheitsgrad. Allgemein gelten diese Verhältnisse, Bedeutungen und Begriffsdefinitionen auch für andere geometrische Modelle und/oder andere Messanordnungen, in deren Zusammenhang die vorliegende Erfindung angewendet werden kann.

Ohne Beschränkung der Allgemeinheit kann die punktförmige Röntgenstrahlungsquelle 2 wie oben beschrieben im Ursprung des Koordinatensystems GKS der Messanordnung angeordnet werden. Ausgehend von diesem Ursprung wird das Koordinatensystem GKS so gewählt, dass die Ebene der Detektionseinrichtung, in der die Detektorfelder verteilt sind, senkrecht zur z-Achse $z_G$ steht, wie es in Fig. 1 dargestellt ist. Diese Detektorebene befindet sich dann im Abstand $s_D$ vom Ursprung des Koordinatensystems GKS. Außerdem ist das Koordinatensystem GKS so ausgerichtet, dass die x- und y-Achsen $x_G$ und $y_G$ parallel zu den x- und y-Achsen des Detektor-Pixelarrays verlaufen. Jede beliebige Ausrichtung und Position der Detektorfelder im Koordinatensystem GKS kann daher eindeutig durch drei Geometrieparameter beschrieben werden: den lotrechten Abstand $s_D$ der Detektorebene vom Ursprung (ein Parameter) sowie die Koordinaten des Durchstoßpunktes der z-Achse durch die Detektorebene (Punkt PP in Fig. 1), angegeben in Einheiten der Detektorpixel und gezählt vom Ursprung des Detektor-Pixelarrays.

Die Anordnung (d. h. Position und Ausrichtung, im Folgenden Pose genannt) des Messobjekts 1 im Koordinatensystem GKS hat drei Freiheitsgrade der Rotation (z. B. durch so genannte Eulersche Winkel oder als Rodrigues-Rotationsvektor dargestellt) und drei Freiheitsgrade der Translation. Ein Punkt $\underline{x}_O$ im Objektkoordinatensystem OKS wird dabei mit der Transformation

$$\underline{x}_G = \underline{\underline{R}}_{OG} \cdot \underline{x}_O + \underline{t}_{OG}$$ ins GKS überführt, wobei $\underline{\underline{R}}_{OG}$ eine Rotationsmatrix (Determinante identisch 1) und $\underline{t}_{OG}$ ein Translationsvektor sind.

Insgesamt existieren also die neun Geometrieparameter, die bei einer vollständigen Geometriekalibrierung bestimmt werden. Für manche Zwecke ist es jedoch auch ausreichend, lediglich einen Teil der neun Geometrieparameter zu bestimmen. Die Erfindung ist daher nicht auf eine vollständige Geometriekalibrierung beschränkt.

Bei Kenntnis der neun Geometrieparameter kann für jedes Voxel (dessen Position durch den Mittelpunkt $\underline{x}_O$ des Voxels im Objektkoordinatensystem bestimmt ist) eine Gerade im Gerätekoordinatensystem GKS ermittelt werden, die durch den Ursprung des Gerätekoordinatensystems GKS und den ins GKS transformierten Voxelmittelpunkt verläuft. Der Schnittpunkt dieser Gerade mit der Detektorebene bezeichnet für jede Projektion das Pixel, das für die Berechnung des Voxelwerts bei der Rückprojektion verwendet werden muss.

Der jeweilige Drehwinkel des Objekts um die Rotationsachse ist dabei durch die Rotationsmatrix $\underline{\underline{R}}_{OG}$ beschrieben.

Im Folgenden wird ein besonders bevorzugtes Ausführungsbeispiel des erfindungsgemäßen Verfahrens beschrieben. Das Verfahren dient der Bestimmung der für die Rekonstruktion relevanten Geometrieparameter einer CT-Anlage aus Röntgenbildern und weist folgende Schritte auf:

   A. Anfertigung eines Kalibrierobjekts
   B. Hochgenaue dreidimensionale Vermessung des Kalibrierobjekts
   C. Aufnahme mehrerer Röntgenbilder des Kalibrierobjekts in der CT-Anlage
   D. Bildverarbeitende Auswertung der Röntgenbilder
   E. Berechnung der Geometrieparameter aus den Ergebnissen der Bildverarbeitung
   F. Aufnahme einer CT-Bildserie für ein Untersuchungsobjekt
   G. Bestimmung der Rotationsachse des Drehtisches
   H. Verwendung der Geometrieparameter bei der Rekonstruktion des Untersuchungsobjekts

Dabei kann Schritt A bei einer wiederholten Ausführung des Verfahrens entfallen. Ferner kann Schritt B in diesem Fall ebenfalls entfallen oder lediglich in größeren Zeitabständen wiederholt werden, oder dann wiederholt werden, wenn Anlass zu der Annahme besteht, dass sich das Kalibrierobjekt verändert hat. Außerdem können Schritte F bis H bei der Kalibrierung entfallen und z. B. einzeln, als separate Schritte bzw. Verfahren ausgeführt werden.

Schritte A und B:

Das in Schritt E zum Einsatz kommende Berechnungsverfahren für die Geometrieparameter hat als Voraussetzung, dass das Kalibrierobjekt n punktförmige oder auf Punkte abstrahierbare Merkmale besitzt. Die dreidimensionalen Koordinaten dieser Merkmale müssen mit hoher Genauigkeit vermessen werden, z.B. mit einem Koordinatenmessgerät (KMG). Außerdem müssen die Bildorte der Merkmale in Röntgenbildern des Kalibrierobjekts, die mit der CT-Anlage aufgenommen werden (so genannte Radioskopieaufnahmen), mit hoher Genauigkeit bestimmt werden, d.h. mit einer Genauigkeit, deren Fehler deutlich unter den Abmessungen eines Pixel der Röntgenbilder liegt.

In der CT-Anlage werden die Radioskopieaufnahmen vorzugsweise mit einem digitalen Sensor aufgezeichnet. Es handelt sich dabei z. B. um ein Photodiodenarray mit 1024 x 1024 Pixeln mit einem vorgelagerten Szintillatorkristall, der die Röntgenstrahlung in sichtbare Strahlung umwandelt. Für die bildverarbeitende Auswertung der Radioskopiebilder können grundsätzlich alle Verfahren angewandt werden, die z.B. aus der Auswertung von Standard-Kamerabildern im sichtbaren Wellenlängenbereich bekannt sind. Zur genauen Bestimmung der Bildorte von ausgezeichneten Objektmerkmalen werden dort häufig Intensitätsunstetigkeiten verwendet, z.B. Kanten oder Ecken. Ein häufig verwendetes Beispiel sind Schachbrettmuster mit einer Vielzahl von schwarzen und weißen Ecken. Es existieren Methoden, um die genauen Bildorte von Kanten oder Ecken in Bildern, die in Pixel aufgelöst sind, mit hoher Genauigkeit zu bestimmen, insbesondere mit einer Genauigkeit, die deutlich feiner als die Abmessungen der Pixel ist. Die dabei erreichbare Genauigkeit ist nur vom Bildrauschen begrenzt.

Da in Radioskopieaufnahmen immer das gesamte Objektvolumen zum Bild beiträgt, sind Intensitätsverläufe im Bild meist stetig, obwohl das Objekt einen unstetigen, nämlich sprunghaften Verlauf des Absorptionskoeffizienten an Materialgrenzen des Objekts hat. Objekte können zwar so orientiert werden, dass eine Objektkante oder Objektoberfläche eine Intensitätsunstetigkeit (d. h. einen scharfen Übergang) im Röntgenbild bewirkt. Eine leichte Verdrehung des Objekts überführt die Intensitätsunstetigkeit jedoch wieder in einen stetigen Intensitätsverlauf. Es ist daher bei Röntgenbildern schwieriger als bei normalen Kamerabildern, solche Objektmerkmale zu entwerfen, die eine Verarbeitung mit den bekannten Methoden der Bildverarbeitung zur genauen Bestimmung von Bildorten erlauben.

Die bevorzugte Lösung besteht in der Verwendung von Kugeln oder zumindest von Kalibrierelementen, deren Oberfläche einen Teil einer Kugeloberfläche bildet, sodass ein entsprechender Kugelmittelpunkt bestimmbar ist. Das bei einer Kugel bestimmbare, einzige punktförmige Merkmal ist der Kugelmittelpunkt. Mit einem KMG kann die Kugeloberfläche an mehreren Stellen (mechanisch und/oder optisch) angetastet werden. Daraus ergeben sich mehrere in einem dreidimensionalen Koordinatensystem (insbesondere dem Koordinatensystem des KMG) bestimmte Punkte auf der Oberfläche der Kugel. Es wird dabei typischerweise eine Genauigkeit von +/- 1 $\mu$m erreicht. Dies entspricht +/- 2 sigma einer Normalverteilung, wobei sigma die Standardabweichung der Normalverteilung ist. Aus diesen Oberflächenpunkten wird unter der Annahme, dass sie auf einer Kugeloberfläche liegen, durch Ausgleichsrechnung der Kugelmittelpunkt bestimmt. Die Koordinaten des Kugelmittelpunkts werden im Folgenden als die Koordinaten des entsprechenden Objektmerkmals (der Kugel oder Teilkugel) verwendet.

Um eine besonders hohe Genauigkeit bei der Bestimmung des Kugelmittelpunkts zu erreichen, sollten Oberflächenpunkte auf zwei einander gegenüberliegenden Hemisphären der Kugel oder Teilkugel angetastet werden. Das Kalibrierobjekt ist daher vorzugsweise entsprechend gestaltet: mindestens zwei Drittel, vorzugsweise vier Fünftel der Kugeloberfläche liegen frei.

Als Kalibrierelemente werden vorzugsweise im Handel erhältliche Präzisionskugeln aus Stahl oder Hartmetall mit einem Rundheitsfehler von ca. 1 $\mu$m verwendet. Die Durchmesser der eingesetzten Kugeln liegen z. B. im Bereich von 2 mm bis zu 10 mm, je nach Größe des Kalibrierobjekts. Vorzugsweise sind die für dasselbe Kalibrierobjekt verwendeten Kugeln gleich groß. Da die invasive Strahlung in einer CT-Anlage auf ihrem Weg von der Strahlungsquelle bis zur Detektionseinrichtung in der Art eines Strahlenkegels divergiert und typischerweise Objektgrößen von wenigen Millimetern bis zu einigen Dutzend Zentimetern untersucht werden können, werden vorzugsweise auch mehrere Kalibrierobjekte unterschiedlicher Größe verwendet. Auf diese Weise kann der Bereich von Objektgrößen mit entsprechend verschieden großen Kalibrierobjekten vollständig abgedeckt werden.

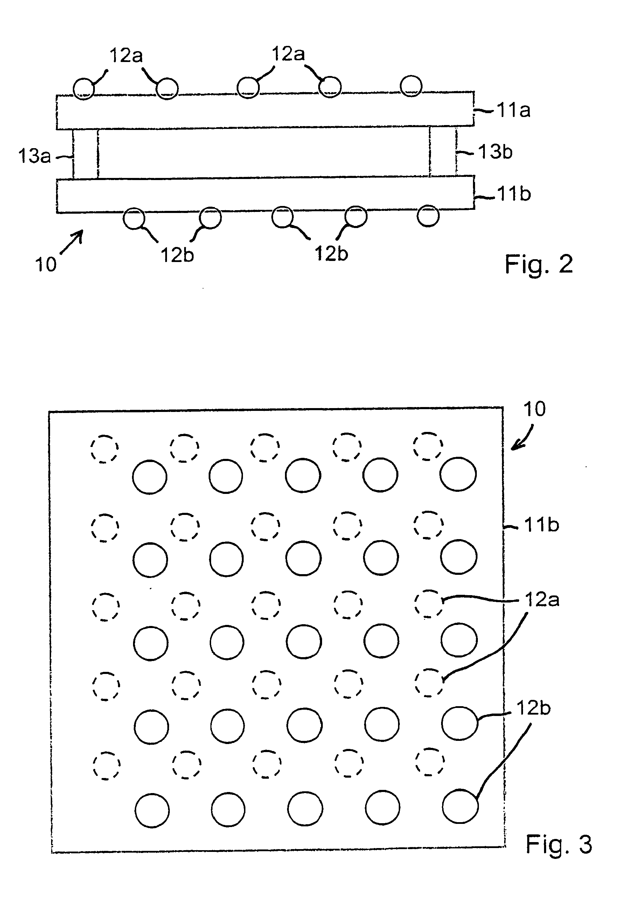

Fig. 2 und Fig. 3 zeigen eine besonders bevorzugte Ausführungsform eines Kalibrierobjekts. Das Kalibrierobjekt 10 weist zwei plattenförmige Trägerelemente 11a, 11b auf, deren Funktion es ist, jeweils eine Mehrzahl von Kugeln 12a, 12b zu tragen und fest miteinander zu verbinden. Die von dem ersten Trägerelement 11a getragenen Kugeln werden durch das Bezugszeichen 12a bezeichnet. Die von dem zweiten Trägerelement 11b getragenen Kugeln werden durch das Bezugszeichen 12b bezeichnet.

In die Trägerelemente 11a, 11b ist jeweils an dem Ort, an dem eine Kugel gehalten werden soll, eine entsprechende kugelsegmentförmige Ausnehmung (Kugelkalotte) eingebracht. Die Kugeln 12a, 12b können in die jeweilige Ausnehmung eingebracht werden und mit dem Trägerelement 11a, bzw. 11b verklebt werden. Es sind pro Trägerelement jeweils fünfundzwanzig Kugeln 12 vorhanden, in fünf Reihen und fünf Spalten mit gleichen Abständen jeweils der Spalten und der Reihen an demselben Trägerelement. Dabei können die Abstände der Reihen und Spalten an den verschiedenen Trägerelementen und/oder die Abstände der Spalten und die Abstände der Reihen an demselben Trägerelement verschieden sein.

Die Trägerelemente 11 sind über Verbindungselemente 13a, 13b fest miteinander verbunden. Außer den in Fig. 2 dargestellten Verbindungselementen 13a, 13b ist vorzugsweise noch zumindest ein weiteres Verbindungselement vorgesehen. Im Ergebnis liegen die Kugelmittelpunkte der Kugeln 12a in einer gemeinsamen Ebene und liegen die Kugelmittelpunkte der Kugeln 12b ebenfalls in einer gemeinsamen Ebene. Dabei sind die beiden Ebenen zueinander parallel.

Alternativ werden die Kugeln nicht geklebt, sondern in die Ausnehmungen oder andere Ausnehmungen oder Löcher eingeklemmt. Hierzu kann beispielsweise zumindest eine Nut oder Vertiefung in die jeweilige Kugeloberfläche eingebracht werden und ist das Trägerelement so gestaltet, dass Vorsprünge in die Nut eingreifen können. Insbesondere durch Nutzung der thermischen Ausdehnung zumindest eines der Materialien wird eine sichere Klemmverbindung erzielt. Hierzu wird beispielsweise das Trägerelement um einige Zehn Kelvin erwärmt und werden die Kugeln in ihre Sollposition gebracht (z. B. in die Ausnehmungen gelegt, sodass die jeweiligen Vorsprünge nahe bei der zugeordneten Nut bzw. Vertiefung liegen). Durch Angleichung der Temperaturunterschiede zwischen den Kugeln und dem Trägerelement greifen die Vorsprünge in die Nuten bzw. Vertiefungen ein. Eine Klebung der Kugeln beinhaltet die Gefahr, dass sich der Kleber löst oder im Lauf der Zeit Kriechprozesse des Klebstoffs stattfinden, die zu einer Veränderung der relativen Lage der Kugeln zueinander führt. Daher sollte die Vermessung der Kalibrierkörper von Zeit zu Zeit wiederholt werden. Alternativ können die Kugeln z. B. wie beschrieben im Trägermaterial geklemmt werden. In diesem Fall ist eine bessere Langzeitstabilität zu erwarten, aber die antastbare Kugeloberfläche ist in der Regel kleiner.

Dadurch, dass nur weniger als die Hälfte der Kugeloberfläche der Kugeln 12 von den zugeordneten Ausnehmungen der Trägerelemente 11 aufgenommen wird, z. B. weniger als ein Drittel, (bzw. bei der alternativen Ausgestaltung mit der Klemmverbindung nur ein kleiner Teil der Kugeloberfläche aufgrund der in die Vertiefungen eingreifenden Vorsprünge von außen unzugänglich ist), ist der Großteil der Kugeloberfläche für eine Antastung durch ein KMG zugänglich.

Fig. 3 zeigt die versetzte Lage der Kugeln 12b (im Vordergrund des Trägerelements 11b) und der Kugeln 12a (gestrichelte Umrisse, hinter dem Trägerelement 11b an dem Trägerelement 12a). Dabei handelt es sich um eine perspektivische Darstellung, die einem mit divergierender Strahlung aufgenommenen Röntgenbild entspricht. Die tatsächlichen Abstände der Kugeln 12b voneinander sind geringer als die Abstände der Kugeln 12a voneinander (siehe Fig. 2). Daher ergibt sich ein Bild wie von einem regelmäßigen Gitternetz, an deren Gitterpunkten sich die Kugelmittelpunkte der Kugeln 12a, 12b befinden.

Die Gitterweiten (und der Versatz der beiden Gitter zueinander) werden in der Praxis vorzugsweise so ausgewählt, dass sich die Kugeln im Bild möglichst bis an den Rand über den insgesamt von der Sensoreinrichtung erfassten Bereich verteilen, und alle Kugelbilder ungefähr gleich große Abstände von den Bildern der Nachbarkugeln haben.

Strahlung, die den Kalibrierkörper 10 etwa senkrecht zu den Ebenen der Kugeln 12a bzw. 12b durchdringt, streift oder kreuzt höchstens eine der Kugeln. Daher sind die Umrisse aller Kugeln jeweils vollständig für die Bildauswertung verfügbar. Insbesondere erlaubt es der Kalibrierkörper 10, Bilder in leicht unterschiedlichen Drehstellungen bzw. leicht unterschiedlichen Ausrichtungen des Kalibrierkörpers relativ zu der Strahlungsquelle und zu der Detektionseinrichtung aufzunehmen. Dabei reicht es für den Erhalt von zusätzlichen Kalibrierinformationen bei der Bestimmung der Geometrieparameter bereits aus, wenn der Kalibrierkörper zwischen den Bildaufnahmen um wenige Grad (z. B. zwei bis fünf Grad) um seine vertikale Achse gedreht wird.

Ein Vorteil der zwei Ebenen, in denen sich Kugelmittelpunkte befinden, besteht darin, dass die Kugeln in einem Volumenbereich verteilt angeordnet sind und nicht lediglich in einer Ebene. Dies verbessert die Bestimmung der Geometrieparameter. Bei Verwendung nur einer Trägerplatte wären die Objektmerkmale (Kugelmittelpunkte) koplanar und die Bestimmung der Geometrieparameter wäre weniger robust. Die gleichmäßige Verteilung der Kugeln jeweils an den beiden Trägerelementen ergibt sich auch aus der Forderung, dass die Kugeln in der Radioskopieaufnahme gleichmäßig über das Bild verteilt erscheinen.

Die Kugeln sind in der Anordnung der Gitterpunkte eines rechteckigen Gitters angeordnet, mit unterschiedlichen Gitterschrittweiten in x- und in $\gamma$-Richtung (Richtungen der Reihen und Spalten der Kugeln) und für die vordere und die hintere Platte. Die Gitterschritfinreiten werden dabei wie oben erwähnt so ausgewählt, dass es zu einer möglichst regelmäßigen Verteilung der Kugeln im Röntgenbild kommt. Die Anordnung der Kugeln auf einem regelmäßigen Rechteckgitter hat den Vorteil, dass bei einer halbautomatischen Bildauswertung für jedes der beiden Gitter (vorne und hinten) nur die äußeren vier Kugeln von Hand bestimmt werden müssen, die Bildpositionen und Bildradien der anderen Kugeln des Gitters lassen sich für jede Ausrichtung des Kalibrierobjekts durch bilineare Interpolation aus den Bildpositionen und -radien der vier äußeren Kugeln bestimmen. Ein weiterer Vorteil des regelmäßigen Rechteckgitters ist es, dass die dreidimensionale Vermessung mit einem KMG weitestgehend automatisiert werden kann, da die auf einem regelmäßigen Raster angeordneten Kugeln durch Ausführen eines einfachen CNC-Programms eine nach der anderen zur Vermessung angefahren werden können.

Ein weiterer Vorteil des in Fig. 2 und Fig. 3 dargestellten Kalibrierkörpers besteht darin, dass seine Abmessungen sowohl mit einem optisch messenden als auch mit einem mechanisch antastenden KMG präzise bestimmt werden können.

Die Auswahl von Kugelmaterial und Trägermaterial erfolgt anhand der folgenden Überlegungen: um bei der Röntgenbildauswertung einen möglichst hohen Signalkontrast zu erhalten, sollte das Plattenmaterial möglichst wenig und die Kugeln sollten möglichst viel Röntgenstrahlung absorbieren; in diesem Fall ergeben sich im Bild dunkle Kugeln mit gut definiertem Rand auf hellem Hintergrund. Das Material der Trägerelemente 11a, 11b ist z.B. Aluminium. Die Wahl von Aluminium als Trägermaterial bedeutet einen einfach zu bearbeitenden Werkstoff mit relativ geringer Röntgenabsorption (0,46/cm bei 100 keV Photonenenergie). Alternativ können z. B. glaskeramische Werkstoffe verwendet werden, die eine deutlich kleinere Temperaturausdehnung zeigen (unter $10^{-6}$/K im Vergleich zu $24 \times 10^{-6}$/K für Aluminium) und vergleichbare Röntgenabsorption, bei aufwändigerer Bearbeitung des Materials.

Sowohl für die Vermessung mit dem KMG als auch für die Röntgenbildauswertung ist es vorteilhaft, dass Präzisionskugeln verwendet werden, mit Rundheitsfehlern im Bereich von weniger als 2 Mikrometern. Als Werkstoffe stehen hier z.B. Stahl und Hartmetall zur Verfügung. Stahl hat eine Röntgenabsorption von ca. 2,9/cm bei 100 keV Photonenenergie, Hartmetall mit Wolframcarbid hat aufgrund des hohen Wolframanteils eine Röntgenabsorption von mehr als 60/cm bei 100 keV.

Eine alternative Ausgestaltung eines Kalibrierobjekts ähnelt dem für eine Kamerakalibrierung im sichtbaren Wellenlängenbereich häufig verwendeten Schachbrettmuster und überträgt das Muster für den Fall der Verwendung von Röntgenstrahlung. Dazu werden Quader mit rechteckigem Querschnitt aus absorbierendem Material angefertigt und fest an ein weniger stark absorbierendes Trägermaterial angebracht. Alternativ kann ein geeignetes Muster in eine Schicht des stärker absorbierenden Materials eingebracht werden, z.B. geätzt werden. Die resultierenden Röntgenbilder entsprechen den Bildern von Schachbrettmustern im sichtbaren Wellenlängenbereich und können daher mit den gleichen Bildverarbeitungsmethoden ausgewertet werden. Die zu bestimmenden Objektmerkmale sind die Positionen der inneren Schachbrettecken, wo jeweils zwei "helle" und zwei "dunkle" Quadrate aufeinandertreffen. Der Bildort einer solchen inneren Schachbrettecke kann z.B. mit der Gradienten-Sattelpunktmethode bestimmt werden. Bei dieser Methode wird für jede innere Schachbrettecke im Röntgenbild der Intensitätsgradient jedes Pixels in der Umgebung der Ecke berechnet. Der genaue Bildort der Ecke ergibt sich als Sattelpunkt des Betrags des Intensitätsgradienten.

Ein Nachteil dieses Kalibrierkörpers ist der größere Aufwand in der Herstellung gegenüber dem Kalibrierobjekt mit Kugeln. Außerdem ist die exakte Bestimmung der Positionen der Schachbrettecken (d. h. die Ermittlung der Abmessungen des Kalibrierkörpers) aufwändiger als die mechanische oder optische Antastung der Präzisionskugeln. Daher ist das Kalibrierobjekt mit Kugeln die bevorzugte Ausführung des Kalibrierobjekts.

Eine weitere Ausführung eines Kalibrierobjekts mit Kugeln als Kalibrierelementen verwendet einen Hohlzylinder als Träger, an dessen Innenwand oder Außenwand die Kugeln befestigt sind, wobei die Kugelmittelpunkte auf einer helixförmigen Linie liegen, die sich um die Symmetrieachse des Hohlzylinders erstreckt. Bei ausreichend großer Ganghöhe der Helix kann dieses Kalibrierobjekt um 360° um die Symmetrieachse des Hohlzylinders gedreht werden, wobei für jeden Drehwinkel alle Kugeln sichtbar sind und keiner der Kugelumrisse einen anderen überlappt. Mit diesem Kalibrierobjekt können also, anders als beim Kalibrierobjekt mit Kugeln in zwei Ebenen, Bildauswertungen für beliebige Drehwinkel durchgeführt werden. Dies ist besonders dann von Interesse, wenn das Kalibrierobjekt nicht nur zur Bestimmung der Geometrieparameter der CT-Anlage verwendet werden soll, sondern wenn das Kalibrierobjekt direkt zur Pose-Bestimmung des Untersuchungsobjekts benutzt wird. Anders als beim Kalibrierobjekt mit zwei parallelen Ebenen der Kugelmittelpunkte haben allerdings einige der Kugeln für jeden Drehwinkel einen inhomogenen Hintergrund. Dabei handelt es sich um diejenigen Kugeln, die im Bild dort zu liegen kommen, wo sich auch der Bildrand des Hohlzylinders befindet. Hierdurch wird die erreichbare Genauigkeit der Bildverarbeitung beeinträchtigt, speziell die Genauigkeit der Bestimmung der Umrisslinie. Für den Zweck der Geometriekalibrierung wird daher das Kalibrierobjekt mit den zwei parallelen Ebenen der Kugelmittelpunkte bevorzugt.

Schritt C: Aufnahme mehrerer Röntgenbilder des Kalibrierobjekts in der CT-Anlage

Die Vermessung des Kalibrierobjekts erlaubt die Bestimmung der aktuellen Geometrieparameter der CT-Anlage. Eine solche Kalibrierung kann z.B. direkt vor oder direkt nach der CT-Vermessung eines Messobjekts (des eigentlichen Untersuchungsobjekts) stattfinden, um die korrekten Geometrieparameter für die Rekonstruktion des Messobjekts zu ermitteln. In diesem Fall gilt folgender Ablauf für die Gesamtmessung inklusive Kalibrierung.

Es werden zuerst Strahlungsquelle, Objekttisch (z. B. ein um eine vertikale Drehachse drehbarer Objekttisch, auf den das Messobjekt oder das Kalibrierobjekt gestellt werden können) und Detektionseinrichtung der CT-Anlage jeweils in eine geeignete Position gebracht, sodass das auf dem Objekttisch befindliche Untersuchungsobjekt annähernd formatfüllend im Detektionsbereich der Detektionseinrichtung abgebildet wird. Insbesondere enthält eine polygonale Umrisslinie des Untersuchungsobjekts (die um das Bild des Untersuchungsobjekts gezogen werden könnte) mindestens 80 Prozent, vorzugsweise mindestens 90 Prozent der Fläche des Detektionsbereichs. Dadurch wird die Größe der Voxel des später aus den zweidimensionalen Röntgenbildern rekonstruierten dreidimensionalen Bildes des Untersuchungsobjekts optimiert und wird somit eine hohe geometrische Auflösung der Rekonstruktion erreicht. Die Positionen von Strahlungsquelle, Objekttisch und Detektionseinrichtung werden danach nicht mehr verändert, damit die mit der Kalibrierung bestimmten Geometrieparameter auch für die CT-Messung des Untersuchungsobjekts gültig sind. Effekte, die die mit der Kalibrierung berechneten Geometrieparameter im Lauf der Zeit ändern können, sind mechanische Veränderungen (Driften) von mechanischen Elementen zum Einstellen der Positionen der Strahlungsquelle, des Objekttischs und der Detektionseinrichtung, sowie eine Veränderung der Einstellung der Elektronenoptik der Röntgenröhre, die wiederum eine Veränderung von Ort und Größe des Brennflecks, d.h. der effektiven Röntgenquelle nach sich zieht.

Im nächsten Schritt wird das Untersuchungsobjekt entfernt und ein Kalibrierobjekt geeigneter Größe auf den Rundtisch gestellt. Das Kalibrierobjekt sollte bei der aktuellen Anordnung von Strahlungsquelle, Objekttisch und Detektionseinrichtung ebenfalls möglichst formatfüllend sein und es sollten alle oder die meisten der Kalibrierelemente (insbesondere der Kugeln) im Radioskopiebild sichtbar sein, wie es beispielsweise bei der Darstellung gemäß Fig. 3 der Fall ist. Wenn einzelne Kugeln im Bild fehlen oder nicht auswertbar sind, kann das Radioskopiebild trotzdem zur Kalibrierung verwendet werden, mit nur geringfügig verminderter Genauigkeit bei der Bestimmung der Geometrieparameter.

Das Kalibrierobjekt muss keine exakte geometrische Ausrichtung auf dem Objekttisch oder bzgl. der Quelle einnehmen. Vorzugsweise sollte nach der Platzierung des Kalibrierobjekts jedoch keiner der Umrisse der Kalibrierelemente einen anderen Umriss überlappen. Falls es sich bei dem Kalibrierobjekt um das Objekt mit den Kugeln in zwei parallelen Ebenen handelt, sollten die Kugeln etwa gleichmäßig über das Bild verteilt sein und die Umrisse der Kugeln voneinander durch ausreichend breite Hintergrundbereiche getrennt sein. Hierdurch kann eine optimale Bildauswertung erzielt werden.

Im nächsten Schritt werden mehrere Radioskopieaufnahmen des Kalibrierobjekts aufgezeichnet, ohne dass die Ausrichtung des Objekts verändert wird. Insbesondere wird das Kalibrierobjekt nicht mit dem Rundtisch gedreht. Der Vorteil mehrerer Aufnahmen unter denselben Bedingungen besteht darin, dass das Bildsignalrauschen reduziert werden kann. Bei der Auswertung werden die einzelnen Bilder jeweils als verrauschte Repräsentationen eines einzelnen geometrischen Zustands verwendet. Es kann so eine höhere Genauigkeit bei der Bestimmung der Geometrieparameter erreicht werden, als wenn nur eine einzelne Radioskopieaufnahme gemacht wird. In der bevorzugten Lösung werden mindestens 5 bis 10 Radioskopieaufnahmen hintereinander aufgenommen, ohne dass Kalibrierobjekt, Quelle, Objekttisch oder Detektionseinrichtung bewegt werden.

Aus jedem Radioskopiebild lassen sich neun Geometrieparameter bestimmen, insbesondere die neun oben definierten Geometrieparameter des beschriebenen geometrischen Modells. In diesem Fall beschreiben die Geometrieparameter ein Gerätekoordinatensystem (GKS), in dem sich die Röntgenstrahlungsquelle im Ursprung befindet und die Detektorebene senkrecht zur z-Achse steht. Außerdem sind die x-Achse und y-Achse des Detektor-Pixelarrays jeweils parallel zur x-Achse und y-Achse des GKS. Der Geometrieparameter $s_D$ bezeichnet den Abstand der Detektorebene vom Ursprung, d.h. den Wert derjenigen positiven z-Koordinate, bei der die z-Achse des GKS die Detektorebene durchstößt (siehe Fig. 1). Die Geometrieparameter cx und cy geben den Ort dieses Durchstoßpunkts PP in der Detektorebene in Einheiten von Detektorpixeln an, gerechnet vom Ursprung des Detektorpixelarrays. Die anderen sechs Geometrieparameter beschreiben die Pose des Kalibrierobjekts im GKS, d.h. die Rotationsmatrix und den Translationsvektor derjenigen Transformation, die Punkte aus dem Objektkoordinatensystem des Kalibrierkörpers ins GKS transformiert.

Die Rotationsmatrix wird dabei als Rodrigues-Rotationsvektor mit drei Komponenten angegeben, sodass sich für die Pose insgesamt 3 (Translation) + 3 (Rodriguesvektor) = 6 Parameter ergeben, zusammen mit den Parametern $s_D$, cx und cy also neun Geometrieparameter. Die Rodrigues Rotationsformel ist ein effizientes Verfahren zur Berechnung einer Rotationsmatrix entsprechend einer Rotation um einen Winkel $\theta$ um eine feste Drehachse, die durch einen Einheitsvektor w definiert ist.

$$e^{\omega\theta} = I + \omega \sin\theta + \omega^2 (1- \cos\theta)$$

I ist dabei die Einheitsmatrix und e ist die Eulersche Zahl.

Das Verfahren wird z. B. in dem Beitrag von Brockett, R. W. "Robotic Manipulators and the Product of Exponentials Formula" (In Mathematical Theory of Networks and Systems. Proceedings of the International Symposium Held at the Ben Gurion University of the Negev, Beer Sheva, June 20-24, 1983 (Ed. P. A. Fuhrmann). Berlin: Springer-Verlag, Seiten. 120-127, 1984) oder in dem Buch von Murray, R. M.; Li, Z.; and Sastry, S. S: "A Mathematical Introduction to Robotic Manipulation" (Boca Raton, Florida, CRC Press, 1994) genauer beschrieben.

Sollen nur die Anordnung der Quelle und der Detektionseinrichtung (Parameter $s_D$, $c_x$ und $c_y$) und die Pose des Kalibrierobjekts bestimmt werden, so ist es ausreichend, für eine einzelne Stellung des Kalibrierobjekts Radioskopieaufnahmen zu machen.

Zur Durchführung einer Rekonstruktion eines dreidimensionalen Bildes aus einer Vielzahl von Radioskopieaufnahmen eines Untersuchungsobjekts ist es allerdings erforderlich, außer dem Abstand Quelle-Detektor (gegeben durch den Parameter $S_D$) auch den Abstand Quelle-Rotationsachse zu bestimmen. Soll dieser Abstand ebenfalls bestimmt werden, so wird der Objekttisch mit dem Kalibrierobjekt um einen kleinen Winkel (z.B. 2°) gedreht und es werden weitere Radioskopieaufnahmen für die neue Pose des Kalibrierobjekts gemacht, ebenfalls wieder mindestens 5 bis 10 Aufnahmen. Die Kugeln müssen in der neuen Pose ebenfalls die Bedingungen für die Bildverarbeitung erfüllen, d.h. es sollten alle Kugeln sichtbar sein und kein Überlapp stattfinden. Für das oben vorgeschlagene Kalibrierobjekt mit Kugeln in zwei Ebenen begrenzt diese Forderung den möglichen Drehwinkel des Kalibrierobjekts. Bei einer Verdrehung des Kalibrierobjekts um 90° kommen z.B. viele Kugeln aufeinander zu liegen und können nicht mehr ausgewertet werden. Ein auf einem Hohlzylinder basiertes Kalibrierobjekt kann dagegen um beliebige Drehwinkel verdreht werden. Es ist allerdings für eine exakte Bestimmung der Rotationsachse ein kleiner Winkel von 2° bereits ausreichend, sodass das Hohlzylinder-Kalibrierobjekt hier keine Vorteile gegenüber dem Platten-Kalibrierobjekt hat.

D. Bildverarbeitende Auswertung der Röntgenbilder

Die Aufgabe der bildverarbeitenden Auswertung ist es, für jede Kugel des Kalibrierobjekts den Bildort des Kugelmittelpunkts möglichst genau zu bestimmen. Diese Bildorte werden dann zusammen mit den in Schritt B aus einer KMG-Messung erhaltenen 3d-Koordinaten der Kugelmittelpunkte in Schritt E zur Bestimmung der Geometrieparameter verwendet.

Bei der Auswertung der Röntgenbilder des Kalibrierobjekts mit den Kugeln als Kalibrierelemente stellen sich die massiven Kugeln im Röntgenbild im Allgemeinen als Ellipsen geringer Exzentrizität dar. Aufgabe der Bildauswertung ist es, die Projektionen der Kugelmittelpunkte mit möglichst hoher Genauigkeit im Röntgenbild zu bestimmen. Als auswertbares Merkmal der Kugel im Röntgenbild wird der Kugelrand verwendet, also die ellipsenförmige Umrisslinie.

Für jede Kugel (im Allgemeinen: für jedes Kalibrierelement) des Kalibrierobjekts wird jeweils ein geeigneter Bildausschnitt des Durchstrahlungsbildes (hier: Röntgenbildes) ausgewertet, der die Kalibrierkugel vollständig zeigt. Wenn das Kalibrierobjekt geeignet gefertigt wurde und wenn bei der Aufnahme des Röntgenbilds das Kalibrierobjekt eine geeignete Ausrichtung hat, so sind alle Kugeln vollständig und ohne Überlapp zu sehen (s. o.). Die Abstände aller Kugelbilder zum jeweils nächsten Nachbarn im Röntgenbild sind ungefähr gleich. Die Kugelbilder zeigen bei der oben beschriebenen Ausführungsform des Kalibrierobjekts auch keinen Überlapp mit anderen Elemente, z.B. mit den Streben, die die beiden Trägerplatten miteinander verbinden. Jedes Kugelbild hat als Hintergrund nur die beiden Trägerplatten. Da es sich um Platten konstanter Stärke und daher konstanter Transmission handelt, erzeugen sie einen homogenen Hintergrund. Ausgenommen hiervon sind die in die Platten eingearbeiteten Kalotten, die zur Aufnahme der Kugeln dienen. Am Ort der Kalotte ist die Stärke der Platten geringfügig vermindert. Ohne die aufgeklebten Kugeln wären die Kalotten schwach im Röntgenbild sichtbar. Insgesamt handelt es sich beim Plattenobjekt um eine Art der Kugelbefestigung, die die Bedingung des homogenen Hintergrunds für alle Kugeln gut erfüllt.

Es sind verschiedener Ansätze denkbar, um den Bildort (d. h. den Ort im Bildkoordinatensystem, z. B. in unskalierten Bildpixel-Koordinaten) des Kugelmittelpunkts zu bestimmen. Zwei der Ansätze werden im Folgenden beschrieben. Zum einen kann das gesamte Kugelbild unter Verwendung aller zugehörigen Pixel in mehreren Iterationen ausgewertet werden. Es wird dazu ein vereinfachtes Modell der Bildentstehung angenommen, und die Parameter dieses Modells werden iterativ so angepasst, dass das aus diesen Parametern resultierende synthetische Kugelbild möglichst gut dem tatsächlichen Kugelbild entspricht, d.h. dem entsprechenden Bildausschnitt aus dem Röntgenbild. Zu den Modellparametern gehören der Bildort des Kugelmittelpunkts sowie der Kugelradius, aber auch z.B. der aktuelle Kippwinkel der Trägerplatten. Der Vorteil dieses Verfahren ist es, dass alle für die Kugel verfügbaren Messwerte (d.h. alle zum Kugelbild gehörenden Pixel) ausgewertet werden, sodass der Einfluss des Bildrauschens minimiert wird. Der Nachteil des Verfahrens ist, dass ein relativ komplexes Modell der Bildentstehung verwendet wird, um alle auftretenden Effekte zu berücksichtigen. Ein komplexes Modell mit vielen Parametern ist bei rauschbehafteten Daten aber immer weniger robust als ein einfacheres Modell mit weniger Parametern. Obwohl nur zwei der Parameter für die weitere Auswertung benötigt werden (x- und y-Koordinate des Kugelmittelpunkts im Bild), müssen alle Modellparameter aus den rauschbehafteten Daten bestimmt werden.

Unter Verwendung einer Bewertungsfunktion werden die Modellparameter optimiert, d.h. die besten Modellparameter aufgefunden. Die Bewertungsfunktion weist jedem möglichen Vektor von Modellparametern (der Vektor enthält als Komponenten die Modellparameter) einen skalaren Wert zu. Zu Beginn wird ein Startvektor von Modellparametern geschätzt, der dann in mehreren Iterationen modifiziert wird. Ziel der Optimierung ist es, ein (globales) Minimum der Bewertungsfunktion zu finden. Für diese Optimierung können an sich bekannte Verfahren angewendet werden, die nur die Funktionswerte der Bewertungsfunktion selbst verwenden (z.B. der so genannte Downhill Simplex Algorithmus nach Nelder und Mead), ebenso wie Verfahren, die auch den Gradienten der Bewertungsfunktion verwenden, d.h. die partiellen Ableitungen der Bewertungsfunktion nach den Modellparametern (z.B. so genannte konjugierte Gradienten, englisch: conjugate gradients). Als Bewertungsfunktion kann z.B. die Summe der quadrierten Abweichungen zwischen gemessener und vom Modell vorhergesagter Intensität verwendet werden, summiert über alle Pixel des Bildausschnitts.

Gemäß dem zweiten Ansatz werden nur diejenigen Pixel des Bildausschnitts ausgewertet, die in der Nähe des Kugelumrisses liegen. Das Verfahren benötigt ebenfalls Schätzwerte für den Bildort des Kugelmittelpunktes und den Bildradius der Kugel. Es muss allerdings nicht iteriert werden. Die Bildauswertung wird in drei Schritten durchgeführt:

1. Festlegung einer Anzahl vorzugsweise gleichlanger Liniensegmente, die den geschätzten Kugelumriss etwa senkrecht schneiden, und Interpolation der Intensitätswerte entlang dieser Liniensegmente. Unter Liniensegmenten werden kurze Linien verstanden.

2. Bestimmung des (eindimensionalen) Ortes des Kugelumrisses für jedes Liniensegment.

3. Einfitten einer geeigneten geometrischen Form in die in Schritt 2 bestimmten Orte des Kugelumrisses.

Zu Beginn liegen Schätzwerte für den Kugelumriss vor, z.B. anhand eines von Hand markierten Kugelumrisses, oder anhand einer automatischen Auswertung des Röntgenbildes. Der Kugelumriss kann als Kreis oder als Ellipse geschätzt werden. Aufgrund der Bildentstehung sollte der Kugelumriss immer als Ellipse geschätzt werden, da besonders die Kugeln in der Nähe des Bildrandes eine merkliche Exzentrizität aufweisen.

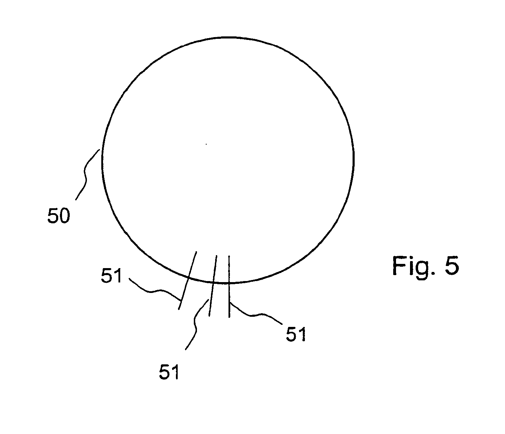

Für Schritt 1 wird anhand der anfänglichen Schätzwerte für den Kugelumriss eine Anzahl von Stützpunkten entlang des Kugelumrisses berechnet. Die Anzahl dieser Stützpunkte ergibt sich aus der Forderung, dass benachbarte Stützpunkte mindestens einen Pixel Abstand voneinander haben. Daraus ergibt sich für einen Kugelbildradius von R Pixeln eine Stützstellenanzahl von ca. $2*\pi*R$. Eine höhere Dichte von Stützpunkten ist nicht sinnvoll, da sonst die gleichen Daten (Grauwerte der Pixel im Röntgenbild) mehrfach ausgewertet werden. Um die Rechenzeit zu verkürzen, können auch größere Abstände der Stützpunkte gewählt werden; es werden dann aber nicht alle zur Verfügung stehenden Bilddaten des Kugelumrisses verwendet und die Genauigkeit bei der Mittelpunktsbestimmung ist entsprechend reduziert. Für jeden so festgelegten Stützpunkt wird ein Liniensegment definiert, in dessen Mitte sich der Stützpunkt befindet und das den geschätzten Kugelumriss senkrecht schneidet. Fig. 5 zeigt schematisch einen Kugelumriss 50 und drei Liniensegmente 51.

Die Länge dieser Liniensegmente ist vorzugsweise für alle Stützpunkte gleich. Sie sollte mindestens zehn, bevorzugt zwanzig Pixel betragen. Die Länge der Liniensegmente ergibt sich aus der Forderung, dass das Liniensegment einen ausreichend großen Teil sowohl des homogenen Hintergrunds als auch des Kugelinneren abdecken soll. Hieraus ergibt sich auch die Forderung, dass alle Kugeln im Röntgenbild ausreichenden Abstand voneinander haben, sodass alle Liniensegmente zur Hälfte auf dem homogenen Hintergrund zu liegen kommen und nicht in ein benachbartes Kugelbild hinein verlaufen.

Für jedes Liniensegment wird das Röntgenbild entlang dem Liniensegment interpoliert, d.h. es werden diejenigen Grauwerte berechnet, die entlang dem Liniensegment im Röntgenbild auftreten. Für jedes Liniensegment entsteht so eine eindimensionale Funktion, die den Grauwertverlauf im Röntgenbild entlang des Liniensegments beschreibt.

Es können jedoch alternativ auch die Bildwerte entlang längerer Linien ausgewertet werden. In diesem Fall ist es sogar denkbar, dass der Schätzwert für den Kugelradius nicht benötigt wird. Es kann dann beispielsweise ausgehend von dem geschätzten Kugelmittelpunkt der erste Ort auf der Linie als Schnittpunkt mit dem Umriss bestimmt werden, der eine signifikante, über einem vordefinierten Grenzwert liegende Grauwert-Änderungsrate aufweist.

Punkte auf dem Liniensegment haben im Röntgenbild im Allgemeinen keine ganzzahligen Koordinaten und müssen daher interpoliert werden. Mögliche zweidimensionale Interpolationsverfahren sind an sich bekannt. Z. B. können Spline-Interpolationen angewendet werden. Bevorzugt wird, dass zumindest die Genauigkeit einer bilinearen Interpolation erreicht wird. Die Schrittgröße für die Interpolationspunkte entlang des Liniensegments kann frei gewählt werden. Um den Kugelumriss möglichst gut abzubilden, kann eine Schrittgröße von deutlich unter einem Pixel gewählt werden, z.B. 0,1 Pixel. Bei einer Länge der Liniensegmente von zwanzig Pixeln und einer Schrittgröße von 0,1 Pixeln werden z.B. pro Liniensegment 201 Werte interpoliert, die den Grauwertverlauf entlang des jeweiligen Liniensegments als eindimensionale Funktion beschreiben.

In Schritt 2 wird für jedes Liniensegment derjenige Punkt bestimmt, bei dem das Liniensegment den Kugelumriss schneidet. Als Ausgangspunkt dienen die in Schritt 1 berechneten, eindimensionalen Grauwertfunktionen.

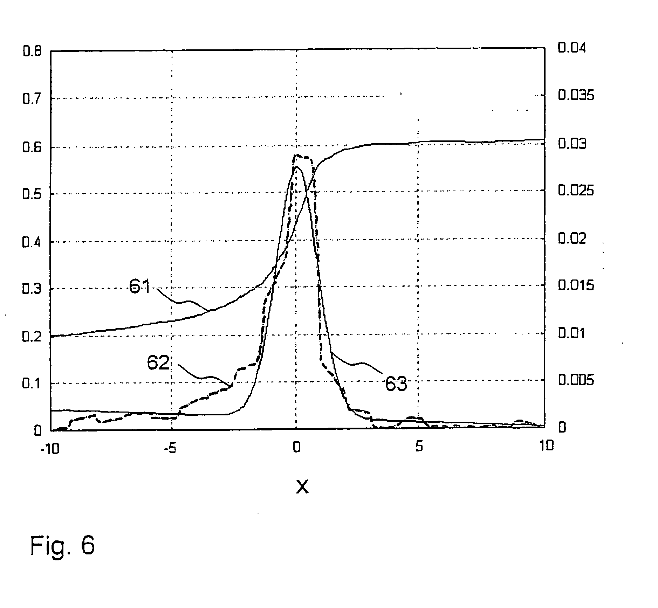

In Fig. 6 ist eine solche Grauwertfunktion exemplarisch dargestellt. Dabei ist die eigentliche Grauwertfunktion mit dem Bezugzeichen 61 bezeichnet, deren Ableitung (gestrichelte Linie) nach dem Pixelort x (in Richtung des Liniensegments) mit 62 und der Fit der Ableitung mit 63. Auf die Bestimmung der Ableitung 62 und des Fit 63 wird noch näher eingegangen. Die Skalierung auf der linken vertikalen Achse betrifft den normierten Grauwert 61; die Skalierung auf der rechten vertikalen Achse die Ableitung 62 und deren Fit 63.

Man erkennt aus der Grauwertfunktion das leicht ansteigende Intensitätsprofil im Inneren der Kugel (links im Graphen) sowie den homogenen Hintergrund (rechts im Graphen, horizontaler Verlauf). Der Übergang ist dabei fließend, d.h. er findet nicht innerhalb eines Pixels statt. Weiterhin ist die Grauwertfunktion nicht symmetrisch bzgl. eines Punktes.

Bei dem besonders bevorzugten Verfahren wird die Ableitung der Grauwertfunktion bestimmt. Die Fig. 6 zeigt den typischen Verlauf der Grauwertableitung. Als Ort des Kugelumrisses wird z.B. das Maximum der Grauwertableitung benutzt. Es gibt mehrere an sich bekannte Verfahren, dieses Maximum zu bestimmen. Zum einen kann einfach der Maximalwert bestimmt werden, den die Grauwertableitung annimmt. Die zugehörige Pixelkoordinate ist dann der Ort des Kugelumrisses in diesem Liniensegment. Diese Art der Auswertung wird allerdings vom Bildrauschen beeinträchtigt. Bei dem besonders bevorzugten Verfahren wird das Maximum der Ableitung besonders robust bestimmt. Dazu werden die Ableitungswerte mit einer Modellfunktion gefittet, die nur wenige Parameter enthält. Aus den errechneten Fitparametern kann der Ort des Ableitungsmaximums bestimmt werden. Es muss eine Modellfunktion gewählt werden, die dem Verlauf der Ableitungswerte möglichst gut entspricht. Beispielsweise kann eine modifizierte Normalverteilungsfunktion gewählt werden:

$$f(x) = a_1 + a_2 \cdot \exp\left(a_3 \cdot (x - a_4)^2\right) + a_5 \cdot x$$

Dabei sind fünf Parameter $a_1$, $a_2$, $a_3$, $a_4$ und $a_5$ zu bestimmen. Die ersten beiden Terme auf der rechten Seite beschreiben eine Normalverteilung, der dritte Term gestattet es, den linearen Trend der Ableitungswerte zu berücksichtigen. Der Parameter $a_4$ gibt den Ort des Maximums der Normalverteilung an (ohne Trend). Bevorzugt wird dieser Wert als Ort des Kugelumrisses verwendet. Alternativ kann auch der Ort maximaler negativer Steigung der Modellfunktion bei

$$a_4 + \sqrt{\frac{-1}{2a_3}}$$

als Ort des Kugelumrisses verwendet werden. Dies entspricht dem "Knick" der Grauwertfunktion am eigentlichen Kugelrand. Die Bestimmung der fünf Parameter aus den Ableitungswerten kann durch nichtlineare Optimierung erfolgen, z.B. mit der iterativen Methode nach Levenberg-Marquardt. Als Ergebnis von Schritt 2 erhält man pro Liniensegment den Ort des Kugelumrisses als Koordinate entlang des Liniensegments. Diese Koordinate kann in zweidimensionale Koordinaten im Röntgenbildausschnitt umgerechnet werden. Insgesamt ergeben sich so aus den in Schritt 1 geschätzten Stützpunkten für den Kugelumriss die gleiche Anzahl neuer Stützpunkte für den Kugelumriss, wobei jetzt aber jeder Stützpunkt das Ergebnis einer lokalen, bildverarbeitenden Auswertung des Kugelbildes ist.

In Schritt 3 werden die aus dem Kugelbild bestimmten Stützpunkte verwendet, um entweder einen Kreis oder eine Ellipse als geometrische Ausgleichsform zu bestimmen. Bevorzugt ist die Bestimmung einer Ellipse (s.o.). Zur Bestimmung einer Ellipse wird das folgende, aus der Literatur bekannte Verfahren verwendet. Die Ellipsengleichung wird in der Form

$$A^*x^2 + B^*y^2 + C^*x^*y + D^*x + E^*y = 1$$

geschrieben. In einem ersten Fit werden die Parameter A, B, C, D und E bestimmt. Dazu werden alle in Schritt 2 bestimmten Stützpunkte (x, y), bzw. deren Koordinaten x, y für den Kugelumriss in die Gleichung eingesetzt. Es ergibt sich ein überbestimmtes System linearer Gleichungen mit den fünf Unbekannten A bis E. Dieses Gleichungssystem kann in der Form $\underline{\underline{A}} \cdot \underline{x} = \underline{b}$ geschrieben werden, wobei $\underline{x}$ der Vektor der fünf Unbekannten ist. Die Lösung dieses Gleichungssystems kann z.B. durch robuste Bestimmung der Inversen bzw. Pseudoinversen der Matrix $\underline{\underline{A}}$ geschehen. Zur robusten Bestimmung der Inversen bzw. Pseudoinversen kann z.B. das aus der Literatur bekannte Verfahren der Einzelwertzerlegung verwandt werden. Dabei wird zur Matrix $\underline{\underline{A}}$ eine Zerlegung $\underline{\underline{A}} = \underline{\underline{U}} \cdot \underline{\underline{W}} \cdot \underline{\underline{V}}^T$ berechnet, wobei $\underline{\underline{U}}$ und $\underline{\underline{V}}$ Spalten-orthogonale Matrizen sind und $\underline{\underline{W}}$ eine Diagonalmatrix ist, deren Hauptdiagonalelemente die Einzelwerte von $\underline{\underline{A}}$ sind. Der gesuchte Vektor lässt sich dann als $\underline{x} = \underline{\underline{A}}^{-1} \cdot \underline{b} = \underline{\underline{V}} \cdot \underline{\underline{W}}' \cdot \underline{\underline{U}}^T \cdot \underline{b}$ berechnen, wobei $\underline{\underline{W}}'$ eine Diagonalmatrix ist und als Hauptdiagonalelemente jeweils die Kehrwerte der entsprechenden Elemente von $\underline{\underline{W}}$ hat. Wenn der Betrag eines Hauptdiagonalelementes von $\underline{\underline{W}}$ unterhalb einer Schwelle liegt, kann zur robusten

Bestimmung von $\underline{x}$ in $\underline{W}'$ das entsprechende Hauptdiagonalelement auf 0 gesetzt werden.

Nachdem die Unbekannten A bis E berechnet wurden, kann der Ellipsenmittelpunkt bestimmt werden, indem die oben angegebene Ellipsengleichung nach x bzw. nach y abgeleitet wird. Das resultierende System aus zwei Gleichungen kann unter Verwendung der oben bestimmten Werte für die Parameter A bis E nach x und y aufgelöst werden; dies ergibt die Mittelpunktskoordinaten der Ellipse. Schließlich können die Parameter A bis C unter Verwendung der so bestimmten Mittelpunktskoordinaten nochmals aus einem überbestimmten Gleichungssystem bestimmt werden. Aus den Parametern A bis C können dann die Hauptachsen sowie der Drehwinkel der Ellipse bestimmt werden.

Nach Beendigung von Schritt 3 liegt somit eine Ausgleichsellipse für die in Schritt 1 und 2 erzeugten Stützpunkte des Kugelumrisses vor. Der Mittelpunkt der Ausgleichsellipse wird als Bildort des Kugelmittelpunkts für die Berechnung der Geometrieparameter verwendet.

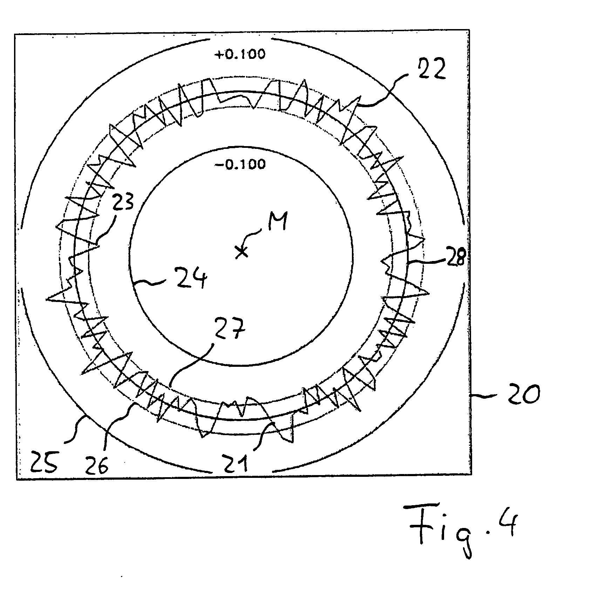

Fig. 4 zeigt einen Bereich 20 aus einem der Röntgenbilder, wobei der Bereich 20 eine rauschbehaftete Umrisslinie 21 von einer der Kugeln enthält und wobei die Umrisslinie 21 durch die Stützpunkte definiert ist. Wie erkennbar ist, zeigt die Umrisslinie 21 einen gezackten Verlauf mit einer Vielzahl von nach außen gerichteten Spitzen 22 und mit einer Vielzahl von nach innen gerichteten Spitzen 23, an denen jeweils ein Stützpunkt liegt. Weitere Stützpunkte liegen zwischen den Spitzen 22, 23. M bezeichnet den Ellipsenmittelpunkt der gefitteten Ellipsenlinie 28. Die Ablage der Stützpunkte von der Ellipse ist in der Abbildung stark vergrößert dargestellt.

Als Maß für die Güte der Ausgleichsrechnung kann der mittlere Abstand der Stützpunkte von der Ausgleichsellipse verwendet werden. Je kleiner dieser Abstand ist, desto besser ist die Schätzung des Ellipsenmittelpunkts. Bei Verwendung von N Stützpunkten für den Kugelumriss gilt für die Standardabweichung der Mittelpunktskoordinaten

$$std(c_{x/y}) = std(Rand) \cdot \sqrt{2/N} \, ,$$

wobei *std*(*Rand*) die Standardabweichung der Ablage der Stützpunkte von der Ausgleichsellipse ist. Bevorzugt wird eine Abbildung des Kalibrierobjekts, bei der der mittlere Kugelradius im Röntgenbild 20 - 30 Pixel beträgt. Daraus ergibt sich ein Faktor von ca. 10, um den die Mittelpunktskoordinaten genauer bestimmt werden als der einzelne Stützpunkt des Kugelumrisses. Es werden so Genauigkeiten bei der Mittelpunktsbestimmung von besser als 0,005 Pixel erreicht ($1\sigma$). Es werden somit ungefähr Genauigkeiten erreicht, die auch bei einer taktilen Messung des Kalibrierkörpers durch ein KMG erreicht werden. In Fig. 4 sind mit 26 und 27 die Begrenzungslinien des Abweichungsbereichs mit +/- $1\sigma$ bezeichnet. Außerdem sind zum Vergleich noch Ellipsenlinien 24 und 25 dargestellt, die einer Abweichung der Stützpunkte um +/- 0,1 Pixel von der gefitteten Ellipsenlinie entsprechen würden.

E. Berechnung der Geometrieparameter aus den Ergebnissen der Bildverarbeitung

Aus Schritt B sind die dreidimensionalen Koordinaten der Merkmale (Kugelmittelpunkte) des Kalibrierobjekts bekannt. In Schritt D wurden für eine Anzahl von Röntgenbildern die zweidimensionalen Bildkoordinaten dieser Merkmale bestimmt; dabei können die Röntgenbilder bei unterschiedlichen Ausrichtungen des Kalibrierobjektes aufgenommen worden sein. Die dreidimensionalen Koordinaten aus den bekannten Abmessungen und die zweidimensionalen Bildkoordinaten werden nun zur Bestimmung der Geometrieparameter verwendet.

Wie schon unter Schritt C beschrieben, wird jedes Röntgenbild des Kalibrierobjekts durch neun Parameter beschrieben. Bei n ausgewerteten Röntgenbildern ist die Anzahl der zu bestimmenden Unbekannten also 3+6*n. Die Anzahl der Gleichungen ist deutlich größer: wenn jedes Röntgenbild m Kugeln (im Allgemeinen: Merkmale) zeigt, so erhält man 2*m*n Gleichungen für die x- und y-Komponenten der Bildkoordinaten. Das Gleichungssystem ist also selbst bei einer geringen Anzahl von Röntgenbildern (kleines n) stark überbestimmt.

Die Lösung des Gleichungssystems wird vorzugsweise iterativ gesucht. Es wird ein Startvektor der unbekannten Geometrieparameter geschätzt. Wiederum (ähnlich wie bei der einen Variante der Bestimmung der Kugelmittelpunkte) wird eine Bewertungsfunktion verwendet, um die Güte des jeweiligen Vektors (der als Komponenten die Geometrieparameter aufweist) zu bestimmen. Insbesondere wird die Standardabweichung der Ablage zwischen den gemessenen Bildkoordinaten und den rückprojizierten Bildkoordinaten als Bewertungsfunktion genutzt. Die rückprojizierten Bildkoordinaten sind dabei diejenigen Bildpunkte, die sich durch Projektion der 3d-Koordinaten des Kalibrierobjekts in die Röntgenbilder mit den aktuellen Parametern der Bildentstehung ergeben (s.u.). Bei der Optimierung wird ein Minimum der Bewertungsfunktion gesucht, dabei werden die partiellen Ableitungen der Bewertungsfunktion nach den unbekannten Geometrieparametern verwendet. Aus dem aktuellen Parametervektor wird in jeder Iteration ein neuer Parametervektor bestimmt, indem ein Vektor im multidimensionalen Parameterraum bestimmt wird, der vom aktuellen Parametervektor in Richtung des steilsten Abfalls (englisch: *steepest gradient descent*) der Bewertungsfunktion zeigt, und der zum aktuellen Parametervektor hinzuaddiert wird.

Das Gleichungssystem ergibt sich aus dem Modell der Bildentstehung. Ausgangspunkt ist der dreidimensionale Ort $\underline{X}_j^M$ des j-ten Kalibriermerkmals im Modellkoordinatensystem des Kalibrierkörpers. Dieser Ort ist bekannt bzw. wurde durch die KMG-Messung bestimmt. Die genaue Wahl des Ursprungs und der Orientierung des Modellkoordinatensystems ist dabei unerheblich. Für das i-te Röntgenbild ergibt sich der Ort des j-ten Merkmals im GKS als

$$\underline{X}_{i,j} = \underline{\underline{R}}_i \cdot \underline{X}_j^M + \underline{t}_i \, ,$$

wobei die Rotationsmatrix $\underline{\underline{R}}_i$ und der Translationsvektor $\underline{t}_i$ die Pose des Kalibrierobjekts für das i-te Röntgenbild beschreiben. Die perspektivische Projektion mit dem Ursprung als Projektionszentrum wird durch

$$\underline{x}_{i,j} = \begin{pmatrix} X_{i,j}^x / X_{i,j}^z \\ X_{i,j}^y / X_{i,j}^z \end{pmatrix}$$

beschrieben. Dabei bezeichnen hochgestellte Indizes die x/y/z-Komponenten des Vektors $\underline{X}_{i,j}$. Der 2d-Vektor $\underline{x}_{i,j}$ wird als normalisierte Projektion von $\underline{X}_{i,j}$ bezeichnet. Er kann als Vektor in der Ebene z = 1 im GKS betrachtet werden. An dieser Stelle besteht die Möglichkeit, eine bei der Bildentstehung beteiligte Verzeichnung (bei optischen Linsensystemen z. B. durch Linsenfehler verursacht) zu modellieren. Bei der Bildentstehung in einer Röntgen-Messanordnung gibt es jedoch keine physikalischen Effekte, die zu einer Abweichung von der Zentralprojektion führen können und die einer Verzeichnung ähneln würde. Aus der normalisierten Projektion ergibt sich die Bildkoordinate $\underline{x}_{i,j}^p$ des j-ten Merkmals im i-ten Röntgenbild gemessen in Sensorpixeln und relativ zum Sensorpixelursprung als

$$\begin{pmatrix} x_{i,j}^{px} \\ x_{i,j}^{py} \\ 1 \end{pmatrix} = \begin{pmatrix} f & 0 & cx \\ 0 & f & cy \\ 0 & 0 & 1 \end{pmatrix} \cdot \begin{pmatrix} x_{i,j}^x \\ x_{i,j}^y \\ 1 \end{pmatrix} .$$

dabei ist der Parameter f in Vielfachen der Sensorpixelgröße anzugeben. Bei der iterativen Optimierung können anhand dieser Gleichungen für die aktuellen Werte von f, $c_x$, $c_y$, $\underline{\underline{R}}_i$ und $\underline{t}_i$ die Bildorte $\underline{x}_{i,j}^p$ der Merkmale berechnet werden. Die mittlere quadratische Abweichung der Differenz zwischen diesen berechneten (rückprojizierten) Bildorten und den in Schritt D im Röntgenbild gemessenen Bildorten dient als Bewertungsfunktion für die iterative Optimierung. Die Optimierung wird z. B. beendet, wenn die Verbesserung des Wertes der Bewertungsfunktion pro Iteration einen Schwellwert unterschreitet und/oder wenn eine maximale Anzahl von Iterationen durchgeführt wurde. Für die Durchführung der Optimierung kann z. B. eine Software verwendet werden, die eine Sammlung von Funktionen aus der MATLAB-Umgebung des Herstellers The MathWorks nutzt, wobei die Sammlung unter der Bezeichnung "camera calibration toolbox" von ihrem Autor J. Bouguet frei zur Verfügung gestellt wird.

F. Aufnahme einer CT-Bildserie für ein Untersuchungsobjekt

Wie bereits in Schritt C beschrieben, kann eine Kalibriermessung (Schritte C bis E) unmittelbar vor oder nach einer CT-Messung durchgeführt werden, sodass die mit der Kalibriermessung bestimmten Geometrieparameter auch für die CT-Messung gültig sind. Voraussetzung ist, dass die Positionen von Röntgenquelle, Drehtisch und Detektor zwischen Kalibrier- und CT-Messung nicht verändert werden.

Eine weitere Verwendung des Kalibrierverfahrens kann darin bestehen, dass für verschiedene Anlagenkonfigurationen (d.h. Einstellungen bzw. Positionen von Röntgenquelle, Drehtisch und Detektor) Kalibriermessungen durchgeführt werden und die so bestimmten Geometrieparameter fest der jeweiligen Anlagenkonfiguration zugeordnet werden. Nach der Durchführung der Kalibriermessungen steht dann eine Reihe kalibrierter Anlagenkonfigurationen zur Verfügung. Wenn eine CT-Messung für ein Untersuchungsobjekt durchgeführt werden soll, kann die CT-Anlage in denjenigen kalibrierten Zustand gebracht werden, der am besten für das Untersuchungsobjekt geeignet ist, z.B. bzgl. Objektgröße und Material. Für die Auswertung der CT-Messung können dann die Geometrieparameter aus der zugehörigen Kalibriermessung verwendet werden. Der Vorteil des Verfahrens besteht darin, dass eine Kalibriermessung nur einmal für eine bestimmte Anlagenkonfiguration durchgeführt werden muss, und nicht wie oben beschrieben vor jeder CT-Messung. Voraussetzung für dieses Vorgehen ist, dass das Verhalten der CT-Anlage vollständig reproduzierbar ist, d.h. dass aus der wiederholten Einstellung der gleichen Anlagenparameter auch immer wieder die gleichen Geometrieparameter resultieren. Permanente Änderungen an der Anlage, wie z.B. eine Veränderung der Röntgenquelle durch das Drehen der Wolframanode, machen solche Kalibrierungen jedoch voraussichtlich hinfällig.

G. Bestimmung der Rotationsachse des Drehtisches

Die Geometrieparameter können in verschiedener Form bei der Rekonstruktion bzw. Auswertung des Untersuchungsobjekts verwendet werden. In der Regel ist es jedoch erforderlich, die Lage der Drehtisch-Rotationsachse zu kennen, um die das Untersuchungsobjekt bei der CT-Messung gedreht wurde.

Zur Bestimmung der Drehtisch-Rotationsachse müssen mindestens zwei Röntgenbilder vom Kalibrierobjekt aufgenommen werden, und die Röntgenbilder müssen das Kalibrierobjekt vor und nach einer Drehung mit dem Drehtisch zeigen. Bevorzugt werden mehrere, z.B. 10 Bilder vor und 10 Bilder nach der Drehung aufgenommen, um den Effekt des Bildrauschens zu minimieren. Es kann ein beliebiger Drehwinkel gewählt werden; bei Verwendung eines Platten-Kalibrierobjekts (s.o.) sollte jedoch ein kleiner Drehwinkel gewählt werden, z.B. 2°, damit auch nach der Drehung die Bedingungen für optimale Bildauswertung gegeben sind, d.h. kein Kugelüberlapp im Bild stattfindet. Die Auswertung der Röntgenbilder geschieht wie oben beschrieben. Bekannt sind dann die globalen Parameter f, $c_z$ und $c_y$ sowie die Poseparameter $\underline{\underline{R}}_i$ und $\underline{t}_i$ für jedes Röntgenbild.

Bei der Bestimmung der Pose der Drehachse werden insbesondere Punkte des Kalibrierobjekts bestimmt, die aus Durchstrahlungsbildern mit unterschiedlichen Posen des Kalibrierobjekts stammen, jedoch im Koordinatensystem der Messanordnung (Gerätekoordinatensystem GKS) dieselbe Position einnehmen. Diese Punkte sind Punkte der Drehachse.

Zur Bestimmung der Drehachse wird bevorzugtermaßen die folgende Überlegung angestellt und entsprechend vorgegangen: im Modellkoordinatensystem (MKS) des Kalibrierkörpers bezeichnet die Drehachse genau diejenigen Punkte, die für beide in der Messung verwendeten Kalibrierkörperposen auf dieselben Punkte im GKS abgebildet werden, denn die Drehung um die Drehachse belässt die Punkte auf der Drehachse ja an ihrem Ort im GKS. Bezeichnen $\widehat{1}$ und $\widehat{2}$ jeweils die Abbildung vom MKS ins GKS für die beiden gemessenen Posen (z.B. für Drehwinkelstellungen des Kalibrierobjekts von 0° und 2°), so entspricht dies der Forderung $\widehat{1}\,\underline{X}^M = \widehat{2}\,\underline{X}^M$, wobei $\underline{X}^M$ ein Punkt im MKS auf der Drehachse ist. Äquivalent kann geschrieben werden ($\widehat{1}^{-1} \circ \widehat{2})\underline{X}^M = \underline{X}^M$, es handelt sich also darum, Fixpunkte der Abbildung $\widehat{1}^{-1} \circ \widehat{2}$ zu bestimmen. Dabei ist $\widehat{1}^{-1}$ eine Abbildung vom GKS ins MKS. Für die spätere Auswertung ist es praktisch, anstelle der Fixpunkte der Abbildung $\widehat{1}^{-1} \circ \widehat{2}$, die von MKS ins MKS abbildet, diejenigen der inversen Abbildung $\widehat{2} \circ \widehat{1}^{-1}$ zu bestimmen, die vom GKS ins GKS abbildet. Die Ergebnisse der Auswertung liegen dann bereits im GKS vor.

Schreibt man diese Abbildung wieder mit Rotationsmatrix und Translationsvektor, so ergibt sich die Gleichung

$$\underline{\underline{R}}_{21} \cdot \underline{X}^G + \underline{t}_{21} = \underline{X}^G \quad \text{bzw.} \quad \left(\underline{\underline{1}} - \underline{\underline{R}}_{21}\right) \cdot \underline{X}^G = \underline{t}_{21},$$

wobei $\underline{\underline{1}}$ die Einheitsmatrix ist und $\underline{X}^G$ ein Punkt im GKS auf der Drehachse ist. In dieser Form ist zu erkennen, dass es sich um ein lineares Gleichungssystem der Form $\underline{\underline{A}} \cdot \underline{x} = \underline{b}$ handelt. Da allerdings nicht nur ein einziger Punkt der Drehachse bestimmt werden soll, sondern die Lage der Drehachse im GKS, kann eine der Komponenten von $\underline{X}^G$ auf einen festen Wert gesetzt werden und die beiden anderen Komponenten können mittels des in Schritt D beschriebenen Verfahrens zur robusten Bestimmung der inversen Matrix $\left(\underline{\underline{1}} - \underline{\underline{R}}_{21}\right)^{-1}$ mittels Einzelwertzerlegung bestimmt werden. Wenn z.B. die Drehachse hauptsächlich in Richtung der y-Achse des GKS verläuft, so können verschiedene Werte für die y-Komponente von $\underline{X}^G$ eingesetzt und die zugehörigen x- und z-Komponenten bestimmt werden. Durch die Bestimmung von zwei solchen Punkten lässt sich die Lage der Drehachse im GKS bestimmen. Es ist dann ersichtlich, ob die Drehachse bzgl. des Detektors verkippt ist, und wo die projizierte Drehachse auf dem Detektor liegt.

H. Verwendung der Geometrieparameter bei der Rekonstruktion des Untersuchungsobjekts

Es gibt noch weitere Möglichkeiten, die Ergebnisse der bildbasierten Geometriekalibrierung zu nutzen. Z. B. können durch die Auswertung geeigneter Posen des Kalibrierobjekts Nichtlinearitäten und Offsetfehler mechanischer Einstelleinrichtungen zur Einstellung der Position und/oder Ausrichtung der Strahlungsquelle, des Objekttischs und/oder der Detektionseinrichtung bestimmt werden. Außerdem können z.B. der Taumelfehler einer Drehachse des Objekttischs und/oder eine Instabilität der Position der Röntgenquelle über längere Zeiträume hinweg bestimmt werden. Zusammenfassend und allgemeiner formuliert lässt sich sagen, dass alle Fehler, die einen oder mehrere der (z. B. neun) relevanten Geometrieparameter beeinflussen, mit Hilfe der bildbasierten Geometriekalibrierung gemessen werden können.

Ein einfaches Verfahren zur Verwendung der Geometrieparameter besteht daher in einer simplen Umskalierung des rekonstruierten Volumens. Dabei wird das Untersuchungsobjekt zuerst wie üblich anhand der Anlagenparameter rekonstruiert. Die unkorrigierte Voxelgröße ergibt sich aus der Detektorpixelgröße $s_{pixel}$, dem Abstand Quelle-Drehtischachse $d_1$ und dem Abstand Quelle-Detektor $d_2$ zu

$$s_{voxel} = s_{pixel} \cdot \frac{d_1}{d_2}.$$

Der Geometrieparameter f entspricht genau dem Abstand Quelle-Detektor, der Abstand Quelle-Drehtischachse kann auf die oben beschriebene Weise bestimmt werden. Es ergibt sich eine korrigierte Voxelgröße, mit der alle im Volumen gemessenen Längen umskaliert werden können.

Eine zweite Anwendung der Geometrieparameter besteht darin, die für die Rekonstruktion verwendeten Parameter aus den Geometrieparametern neu zu berechnen. Es handelt sich dabei z.B. um die schon erwähnten Abstände Quelle-Drehtischachse und Quelle-Detektor, aber auch um den Bildort der Drehachse auf dem Detektor sowie die Parameter $c_x$ und $c_y$. Idealerweise wird bei der Rekonstruktion auch die genaue Lage der Drehachse inklusive Verkippungen gegenüber dem Detektor berücksichtigt. Hierzu muss allerdings eine Modifikation des üblicherweise eingesetzten Feldkamp-Algorithmus verwendet werden, da dieser nur eine nicht verkippte Drehachse berücksichtigen kann. Z.B. können alle neun berechneten Geometrieparameter verwendet werden, um für jeden Drehwinkel des Drehtisches die 12 Einträge einer 3x4-Matrix A zu berechnen. Mithilfe der Matrix A kann dann für jeden Punkt (X,Y,Z) des Modellkoordinatensystems der zugehörige Ort in Pixelkoordinaten (U,V) in der Projektion gemäß einer projektiven Abbildung bestimmt werden.

**Patentansprüche**

1.  Verfahren zum Kalibrieren einer Messanordnung (2, 3), die mittels invasiver Strahlung Bilder von Messobjekten (1) erzeugt, insbesondere einer Computertomografie (CT)-Messanordnung, wobei

    - die invasive Strahlung ein Kalibrierobjekt (10) durchdringt und eine resultierende Strahlung von einer Detektionseinrichtung (3) der Messanordnung (2, 3) detektiert wird, wobei das Kalibrierobjekt (10) zumindest ein Kalibrierelement (12a, 12b) aufweist,
    - aus Detektionssignalen der Detektionseinrichtung (3), die der von der Detektionseinrichtung (3) detektierten Strahlung entsprechen, ein Durchstrahlungsbild des Kalibrierobjekts (10) erzeugt wird,
    - das Kalibrierobjekt (10) bekannte Abmessungen aufweist und
    - durch Auswertung des zumindest einen Durchstrahlungsbildes Geometrieparameter eines geometrischen Modells, das eine Geometrie der Messanordnung (2, 3) beschreibt, bestimmt werden, wobei ein Schätzwert für zumindest einen Ort eines geometrischen Merkmals des Kalibrierelements (12a, 12b) in dem Durchstrahlungsbild ermittelt wird oder vorliegt,

**dadurch gekennzeichnet, dass**

a) unter Verwendung des Schätzwertes Linien in dem Durchstrahlungsbild definiert werden, die quer zu einem Umriss des Kalibrierelements (12a, 12b) verlaufen,

b) Bildwerte des Durchstrahlungsbildes entlang der Linien ausgewertet werden und aus den Bildwerten für die Linien jeweils ein Umriss-Ort in dem Durchstrahlungsbild festgestellt wird, in dem die Linie den Umriss des Kalibrierelements (12a, 12b) schneidet,

c) aus den Umriss-Orten eine Lage des Kalibrierelements (12a, 12b) ermittelt wird und die Lage bei der Bestimmung der Geometrieparameter verwendet wird.

2. Verfahren nach dem vorhergehenden Anspruch, wobei bei der Feststellung zumindest eines der Umriss-Orte eine Modeilfunktion in einen Verlauf der Bildwerte entlang der Linie oder in einen Verlauf einer örtlichen Ableitung der Bildwerte entlang der Linie gefittet wird.

3. Verfahren nach einem der vorhergehenden Ansprüche, wobei das Durchstrahlungsbild einer Messgeometrie entspricht, die das Durchstrahlungsbild durch eine von einer punktförmigen Strahlungsquelle (2) ausgehende Zentralprojektion erzeugt.

4. Verfahren nach dem vorhergehenden Anspruch, wobei die bekannten Abmessungen des Kalibrierobjekts (10) durch eine von der zu kalibrierenden Messanordnung (2, 3) verschiedene, zweite Messanordnung ermittelt werden.

5. Verfahren nach dem vorhergehenden Anspruch, wobei die zweite Messanordnung ein Koordinatenmessgerät aufweist, das ausgestaltet ist, durch optisches und/oder mechanisches Abtasten zumindest von Teilen einer Oberfläche des Kalibrierobjekts (10) die Abmessungen des Kalibrierobjekts (10) zu ermitteln.

6. Verfahren nach einem der vorhergehenden Ansprüche, wobei das zumindest eine Kalibrierelement (12a, 12b) eine kugelförmige Oberfläche aufweist und/oder eine Oberfläche aufweist, die zumindest einen Teil einer Kugeloberfläche bildet.

7. Verfahren nach dem vorhergehenden Anspruch, wobei der Schätzwert ein Schätzwert für den Ort eines Kugelmittelpunktes in dem Durchstrahlungsbild ist, wobei der Kugelmittelpunkt der kugelförmigen Oberfläche bzw. Kugeloberfläche zugeordnet ist.

8. Verfahren nach einem der beiden vorhergehenden Ansprüche, wobei außer dem Schätzwert für den Ort des Kugelmittelpunktes auch ein Schätzwert für den Radius oder Durchmesser einer zugeordneten Kugel ermittelt wird oder vorliegt und bei der Definition der Linien in dem Durchstrahlungsbild verwendet wird.

9. Verfahren nach einem der drei vorhergehenden Ansprüche, wobei aus dem zumindest einen Durchstrahlungsbild eine Position eines Umrisses und/oder Mittelpunktes der Kugeloberfläche und/oder eine Relativposition und/oder ein Abstand des Umrisses und/oder Mittelpunktes zu einem weiteren Ort in dem Kalibrierobjekt (10) ermittelt wird und wobei die Position, die Relativposition und/oder der Abstand bei der Bestimmung der Geometrieparameter verwendet wird.

10. Verfahren nach dem vorhergehenden Anspruch, wobei das Kalibrierobjekt (10) eine Mehrzahl der Kalibrierelemente (12a, 12b) aufweist und wobei jeweils die Position, die Relativposition und/oder der Abstand ermittelt wird und bei der Bestimmung der Geometrieparameter verwendet wird.

11. Verfahren nach dem vorhergehenden Anspruch, wobei das Kalibrierobjekt (10) bei einer Aufnahme des Bildes so angeordnet ist, dass jeder Strahl der invasiven Strahlung, die zur Aufnahme des Bildes verwendet wird, lediglich höchstens eines der Kalibrierelemente (12a, 12b) durchquert oder streift.

12. Verfahren nach einem der drei vorhergehenden Ansprüche, wobei das Kalibrierobjekt (10) derart gestaltet und bei der Erzeugung des Bildes derart positioniert und ausgerichtet ist, dass in dem Bild eine Umrisslinie des zumindest einen Kalibrierelements (12a, 12b) vor einem homogenen Hintergrund erscheint.

13. Verfahren nach einem der vorhergehenden Ansprüche, wobei aus dem Durchstrahlungsbild eine Mehrzahl von Oberflächenpunkten ermittelt wird, wobei die Oberflächenpunkte Punkte auf einer Oberfläche des Kalibrierelements (12a, 12b) sind und wobei aus der Mehrzahl von Oberflächenpunkten durch Ausgleichsrechnung eine der Oberfläche zugeordnete Umrisslinie ermittelt wird.

14. Verfahren nach einem der vorhergehenden Ansprüche, wobei jeweils für eine Mehrzahl von Bildmerkmalen in dem Durchstrahlungsbild auf ein Koordinatensystem des Durchstrahlungsbildes bezogene Bildkoordinaten bestimmt werden, wobei mit den Bildkoordinaten und mit entsprechenden Koordinaten aus den bekannten Abmessungen des Kalibrierobjekts (10) entsprechend dem geometrischen Modell ein Gleichungssystem gebildet wird und wobei aus dem Gleichungssystem die Geometrieparameter bestimmt werden.

15. Verfahren nach dem vorhergehenden Anspruch, wobei das Gleichungssystem ein hinsichtlich der zu bestimmenden Anzahl von Geometrieparameter überbestimmtes Gleichungssystem ist.

16. Verfahren nach einem der beiden vorhergehenden Ansprüche, wobei das Gleichungssystem iterativ, durch Annahme und Veränderung möglicher Lösungswerte der Geometrieparameter gelöst wird, wobei für jeden verwendeten Lösungswerte-Satz der Geometrieparameter ein Bewertungsmaß für eine Güte des Lösungswerte-Satzes bestimmt wird und die Geometrieparameter des geometrischen Modells aus dem Lösungswerte-Satz mit der höchsten Güte erhalten werden.

17. Anordnung zum Kalibrieren einer Messanordnung (2, 3), die mittels invasiver Strahlung Durchstrahlungsbilder von Messobjekten erzeugt. Insbesondere einer Computertomografie (CT)-Messanordnung, wobei die Anordnung Folgendes aufweist:

  - eine Strahlungsquelle (2) zur Erzeugung der invasiven Strahlung,
  - einen Messraum, in dem ein Messobjekt angeordnet werden kann, sodass die von der Strahlungsquelle (2) ausgehende invasive Strahlung das Messobjekt durchdringen kann,
  - eine Detektionseinrichtung (3) zur Detektion von Strahlung, die ein Ergebnis der Durchstrahlung des Messobjekts mit der invasiven Strahlung ist,
  - ein Kalibrierobjekt (10), wobei das Kalibrierobjekt (10) als ein Messobjekt in dem Messraum angeordnet ist und zumindest ein Kalibrierelement (12a, 12b) aufweist

  wobei die Strahlungsquelle (2), der Messraum und die Detektionseinrichtung (3) Teil der Messanordnung zur Erzeugung von Durchstrahlungsbildem von Messobjekten mittels invasiver Strahlung sind,
  wobei die Anordnung eine Auswertungseinrichtung zur Auswertung zumindest eines der Durchstrahlungsbilder aufweist und wobei die Auswertungseinrichtung so ausgestaltet ist, dass bei der Auswertung Geometrieparameter eines geometrischen Modells, das eine Geometrie der Messanordnung (2, 3) beschreibt, bestimmt werden und ein Schätzwert für zumindest einen Ort eines geometrischen Merkmals des Kalibrierelements (12a, 12b) in dem Durchstrahlungsbild ermittelt wird oder vorliegt,
  **dadurch gekennzeichnet, dass** die Auswertungseinrichtung so ausgestaltet ist, dass

  a) unter Verwendung des Schätzwertes Linien in dem Durchstrahlungsbild definiert werden, die quer zu einem Umriss des Kalibrierelements (12a, 12b) verlaufen,
  b) Bildwerte des Durchstrahlungsbildes entlang der Linien ausgewertet werden und aus den Bildwerten für die Linien jeweils ein Umriss-Ort in dem Durchstrahlungsbild festgestellt wird, in dem die Linie den Umriss des Kalibrierelements (12a, 12b) schneidet,
  c) aus den Umriss-Orten eine Lage des Kalibrierelements (12a, 12b) ermittelt wird und die Lage bei der Bestimmung der Geometrieparameter verwendet wird.

## Claims

1. Method for calibrating a measuring apparatus (2, 3), said measuring apparatus producing images of measuring objects (1) by means of invasive radiation, in particular a computer tomography (CT) measuring apparatus, wherein

  - the invasive radiation penetrates a calibrating object (10) and a resulting radiation is detected by a detection unit (3) of the measuring apparatus (2, 3), wherein the calibrating object (10) has at least one calibrating element (12a, 12b),
  - from detection signals of the detection unit (3) that correspond to the radiation detected by the detection unit (3), a radiographic image of the calibrating objects (10) is produced,
  - the calibrating object (10) has known dimensions and

- by evaluating the at least one radiographic image, geometry parameters of a geometrical model, which describes a geometry of the measuring apparatus (2, 3), are determined, wherein an estimated value for at least one location of a geometrical feature of the calibrating element (12a, 12b) is determined in the radiographic image or is present, **characterised in that**

a) by using the estimated value, lines in the radiographic image are defined which run transversal to a contour of the calibrating element (12a, 12b),
b) image values of the radiographic image are evaluated along the lines and, from the image values for the lines, a contour location each is found in the radiographic image, in which the line intersects the contour of the calibrating element (12a, 12b),
c) from the contour locations, a position of the calibrating element (12a, 12b) is determined and the position is used in determining the geometry parameters.

2. Method according to the preceding claim, wherein, while finding at least one of the contour locations, a model function is fitted in a run of the image values along the line or in a run of a local derivation of the image values along the line.

3. Method according to any one of the preceding claims, wherein the radiographic image corresponds to a measuring geometry which produces the radiographic image by a central projection emanating from a punctuate radiation source (2).

4. Method according to the preceding claim, wherein the known dimensions of the calibrating object (10) are determined by a second measuring apparatus which differs from the measuring apparatus (2, 3) to be calibrated.

5. Method according to the preceding claim, wherein the second measuring apparatus has a coordinate measuring device designed to determine the dimensions of the calibrating objects (10) by means of optical and/or mechanical sampling of at least parts of a surface of the calibrating object (10).

6. Method according to any one of the preceding claims, wherein the at least one calibrating element (12a, 12b) has a spherical surface and/or has a surface which forms at least part of a surface of the sphere.

7. Method according to the preceding claim, wherein the estimated value is an estimated value for the location of a centre of the sphere in the radiographic image, wherein the centre of the sphere is allocated to the spherical surface or the surface of the sphere.

8. Method according to any one of the two preceding claims, wherein, in addition to the estimated value for the location of the centre of the sphere, an estimated value for the radius or diameter of an allocated sphere is also determined or present and is used in defining the lines in the radiographic image.

9. Method according to any one of the three preceding claims, wherein, from the at least one radiographic image, a position of a contour and/or centre of the surface of the sphere and/or a relative position and/or a distance of the contour and/or centre to a further location in the calibrating object (10) is determined and wherein the position, the relative position and/or the distance is used in determining the geometry parameters.

10. Method according to the preceding claim, wherein the calibrating object (10) has a plurality of the calibrating elements (12a, 12b) and wherein the position, the relative position and/or the distance each is determined and used in determining the geometry parameters.

11. Method according to the preceding claim, wherein the calibrating object (10) during a taking of the image is arranged such that each beam of the invasive radiation, which is used for taking the image, only crosses or brushes at most one of the calibrating elements (12a, 12b).

12. Method according to any one of the three preceding claims, wherein the calibrating object (10) is designed such and, when producing the image, positioned and aligned such that, in the image, a contour line of the at least one calibrating element (12a, 12b) appears before a homogeneous background.

13. Method according to any one of the preceding claims, wherein, from the radiographic image, a plurality of surface points is determined, wherein the surface points are points on a surface of the calibrating element (12a, 12b) and wherein, from the plurality of surface points, by means of equalisation calculation, a contour line allocated to the surface is determined.

14. Method according to any one of the preceding claims, wherein, for each plurality of image features in the radiographic image, image coordinates relating to a coordinate system of the radiographic image are determined, wherein, with the image coordinates and with corresponding coordinates, an equation system is formed from the known dimensions of the calibrating object (10) corresponding to the geometrical model and wherein the geometry parameters are determined from the equation system.

15. Method according to the preceding claim, wherein the equation system is an over-determined equation system as regards the number of geometry parameters to be determined.

16. Method according to any one of the two preceding claims, wherein the equation system is solved iteratively, by assuming and changing possible solution values of the geometry parameters, wherein, for each used set of solution values of the geometry parameters, an evaluation measure for a quality of the set of solution values is determined and the geometry parameters of the geometrical model are obtained from the set of solution values with the highest quaility.

17. Arrangement for calibrating a measuring apparatus (2, 3) which produces radiographic images of measuring objects by means of invasive radiation, in particular a computer tomography (CT) measuring apparatus, wherein the apparatus comprises of:

- a radiation source (2) for producing the invasive radiation,
- a measuring space in which a measuring object can be arranged, so that the invasive radiation emanating from the radiation source (2) can penetrate the measuring object,
- a detection unit (3) for detecting radiation which is a result of penetrating the measuring object with the invasive radiation,
- a calibrating object (10), wherein the calibrating object (10) is arranged as a measuring object in the measuring space and has at least one calibrating element (12a, 12b)

wherein the radiation source (2), the measuring space and the detection unit (3) are part of the measuring apparatus for producing radiographic images of measuring objects by means of invasive radiation,

wherein the arrangement has an evaluation unit for evaluating at least one of the radiographic images and wherein the evaluation unit is designed such that, during evaluation, geometry parameters of a geometrical model, which describes a geometry of the measuring apparatus (2, 3), are determined and an estimated value is determined or present for at least one location of a geometrical feature of the calibrating element (12a, 12b) in the radiographic image,

**characterised in that** the evaluation unit is designed such that

a) by using the estimated value, lines in the radiographic image are defined which run transversal to a contour of the calibrating element (12a, 12b),

b) image values of the radiographic image are evaluated along the lines and, from the image values for the lines, a contour location each is found in the radiographic image, in which the line intersects the contour of the calibrating element (12a, 12b),

c) from the outline locations, a position of the calibrating element (12a, 12b) is determined and the position is used in determining the geometry parameters.

**Revendications**

1. Procédé de calibrage d'un dispositif de mesure (2, 3), qui génère au moyen d'un rayonnement invasif des images d'objets à mesurer (1), en particulier un dispositif de mesure de tomographie assistée par ordinateur (CT), dans lequel

- le rayonnement invasif pénètre un objet de calibrage (10) et un rayonnement en résultant est détecté par un système de détection (3) du dispositif de mesure (2, 3), l'objet de calibrage (10) comportant au moins un élément de calibrage (12a, 12b),
- une image d'irradiation de l'objet de calibrage (10) est générée à partir des signaux de détection du système de détection (3) qui correspondent au rayonnement détecté par le système de détection (3),

- l'objet de calibrage (10) comporte des dimensions connues et
- par évaluation de l'au moins une image d'irradiation sont déterminés des paramètres de géométrie d'un modèle géométrique, qui décrit une géométrie du dispositif de mesure (2, 3), une valeur d'estimation pour au moins un lieu d'une caractéristique géométrique de l'élément de calibrage (12a, 12b) étant déterminée ou présente dans l'image d'irradiation,

**caractérisé en ce que**

a) par l'utilisation de la valeur d'estimation sont définies des lignes dans l'image d'irradiation qui se dirigent obliquement vers un contour de l'élément de calibrage (12a,12b),
b) des valeurs d'image de l'image d'irradiation sont évaluées le long des lignes et à partir des valeurs d'image est déterminé respectivement pour les lignes un lieu de contour dans l'image d'irradiation dans laquelle la ligne coupe le contour de l'élément de calibrage (12a, 12b),
c) une position de l'élément de calibrage (12a, 12b) est déterminée à partir des lieux de contour et la position est employée lors de la détermination des paramètres de géométrie.

2. Procédé selon la revendication précédente, dans lequel, lors de la détermination d'au moins un des lieux de contour, une fonction de modélisation est adaptée dans un tracé des valeurs d'image le long de la ligne ou dans un tracé d'une dérivation locale des valeurs d'image le long de la ligne.

3. Procédé selon l'une quelconque des revendications précédentes, dans lequel l'image d'irradiation correspond à une géométrie de mesure qui génère l'image d'irradiation par une projection centrale partant d'une source de rayonnement (2) de forme ponctuelle.

4. Procédé selon la revendication précédente, dans lequel les dimensions connues de l'objet de calibrage (10) sont déterminées par un deuxième dispositif de mesure différent du dispositif de mesure (2, 3) à calibrer.

5. Procédé selon la revendication précédente, dans lequel le deuxième dispositif de mesure comporte un appareil de mesure de coordonnées qui est agencé pour déterminer les dimensions de l'objet de calibrage (10) par un balayage optique et/ou mécanique d'au moins des parties d'une surface de l'objet de calibrage (10).

6. Procédé selon l'une quelconque des revendications précédentes, dans lequel l'au moins un élément de calibrage (12a, 12b) présente une surface sphérique et/ou une surface qui forme au moins une partie d'une surface sphérique.

7. Procédé selon la revendication précédente, dans lequel la valeur d'estimation est une valeur d'estimation pour le lieu d'un point central de sphère dans l'image d'irradiation, le point central de sphère étant associé à la surface de forme sphérique respectivement à la surface sphérique.

8. Procédé selon l'une des deux revendications précédentes, dans lequel, en plus de la valeur d'estimation pour le lieu du point central de sphère, une valeur d'estimation pour le rayon ou le diamètre d'une sphère associée est également déterminée ou présente et est employée lors de la définition des lignes dans l'image d'irradiation.

9. Procédé selon l'une des trois revendications précédentes, dans lequel, à partir de l'au moins une image d'irradiation, une position d'un contour et/ou du point central de la surface sphérique et/ou une position relative et/ou une distance du contour et/ou du point central à un autre lieu dans l'objet de calibrage (10) est/sont déterminée(s), la position, la position relative et/ou la distance étant employées pour la détermination des paramètres de géométrie.

10. Procédé selon la revendication précédente, dans lequel l'objet de calibrage (10) comporte une pluralité d'éléments de calibrage (12a, 12b) et la position, la position relative et/ou la distance sont déterminées à chaque fois et employées lors de la détermination des paramètres de géométrie.

11. Procédé selon la revendication précédente, dans lequel l'objet de calibrage (10) est disposé lors d'une prise de l'image de sorte que chaque rayon du rayonnement invasif, qui est employé pour la prise de l'image, traverse ou effleure tout au plus un des éléments de calibrage (12a, 12b).

12. Procédé selon l'une des trois revendications précédentes, dans lequel l'objet de calibrage (10) est agencé de manière telle et, lors de la génération de l'image, est positionné et orienté de manière telle qu'une ligne de contour de l'au moins un élément de calibrage (12a, 12b) apparaisse dans l'image devant un arrière-plan homogène.

**13.** Procédé selon l'une quelconque des revendications précédentes, dans lequel une pluralité de points en surface est déterminée à partir de l'image d'irradiation, les points en surface étant des points sur une surface de l'élément de calibrage (12a, 12b) et une ligne de contour associée à la surface étant déterminée à partir de la pluralité des points en surface par un calcul d'égalisation.

**14.** Procédé selon l'une quelconque des revendications précédentes, dans lequel des coordonnées d'image relatives à un système de coordonnées de l'image d'irradiation sont déterminées pour chaque pluralité de caractéristiques d'image dans l'image d'irradiation, un système d'équations étant formé conformément au modèle géométrique avec les coordonnées d'image et avec des coordonnées correspondantes à partir des dimensions connues de l'objet de calibrage (10) et les paramètres de géométrie étant déterminés à partir du système d'équations.

**15.** Procédé selon la revendication précédente, dans lequel le système d'équations est un système d'équations surdéterminé en ce qui concerne le nombre à déterminer de paramètres de géométrie.

**16.** Procédé selon l'une des deux revendications précédentes, dans lequel le système d'équations est solutionné de manière itérative par supposition et modification de valeurs de solution potentielles des paramètres de géométrie, une cote d'évaluation pour une qualité de l'ensemble de valeurs de solution étant déterminée pour chaque ensemble de valeurs de solution employé des paramètres de géométrie et les paramètres de géométrie du modèle géométrique étant obtenus à partir de l'ensemble de valeurs de solution ayant la qualité la plus élevée.

**17.** Dispositif de calibrage d'un dispositif de mesure (2, 3) qui génère au moyen d'un rayonnement invasif des images d'irradiation d'objets à mesurer, en particulier un dispositif de mesure de tomographie assistée par ordinateur (CT), le dispositif comprenant :

- une source de rayonnement (2) servant à générer le rayonnement invasif,
- un espace de mesure dans lequel un objet à mesurer peut être disposé de sorte que le rayonnement invasif émis par la source de rayonnement (2) puisse pénétrer l'objet à mesurer,
- un système de détection (3) servant à détecter un rayonnement qui est un résultat de l'irradiation de l'objet à mesurer par le rayonnement invasif,
- un objet de calibrage (10), l'objet de calibrage (10) étant disposé dans l'espace de mesure en tant qu'objet à mesurer et comportant au moins un élément de calibrage (12a, 12b)

la source de rayonnement (2), l'espace de mesure et le système de détection (3) étant des parties du dispositif de mesure servant à générer des images d'irradiation d'objets à mesurer au moyen d'un rayonnement invasif, le dispositif comportant au moins un système d'évaluation servant à évaluer au moins une des images d'irradiation et le système d'évaluation étant agencé de sorte que des paramètres de géométrie d'un modèle géométrique, qui décrit une géométrie du dispositif de mesure (2, 3), soient déterminés lors de l'évaluation et qu'une valeur d'estimation soit déterminée ou présente pour au moins un lieu d'une caractéristique géométrique de l'élément de calibrage (12a, 12b) dans l'image d'irradiation, **caractérisé en ce que** le système d'évaluation est agencé de sorte que

a) par l'utilisation de la valeur d'estimation soient définies dans l'image d'irradiation des lignes qui se dirigent obliquement vers un contour de l'élément de calibrage (12a,12b),
b) des valeurs d'image de l'image d'irradiation soient évaluées le long des lignes et que, à partir des valeurs d'image, un lieu de contour soit déterminé respectivement pour les lignes dans l'image d'irradiation dans laquelle la ligne coupe le contour de l'élément de calibrage (12a, 12b),
c) une position de l'élément de calibrage (12a, 12b) soit déterminée à partir des lieux de contour et que la position soit employée lors de la détermination des paramètres de géométrie.

Fig. 1

EP 1 760 457 B1

Fig. 2

Fig. 3

+0.100

−0.100

22

23

M

24

28

27

20

25  26  21

Fig.4

50

51

51

51

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3924066 A1
- EP 1414004 A1
- US 20040034298 A1
- US 5149965 A
- US 20050094771 A1
- WO 2005018456 A1
- US 20040252811 A1

**In der Beschreibung aufgeführte Nicht-Patentliteratur**

- Robotic Manipulators and the Product of Exponentials Formula. **BROCKETT, R. W.** Mathematical Theory of Networks and Systems. Proceedings of the International Symposium Held at the Ben Gurion University of the Negev. Springer-Verlag, 1984, 120-127
- **MURRAY, R. M. ; LI, Z. ; SASTRY, S. S.** A Mathematical Introduction to Robotic Manipulation. CRC Press, 1994